# EUROPÄISCHE PATENTSCHRIFT

(11) **EP 3 330 311 B1**
(45) Veröffentlichungstag und Bekanntmachung des Hinweises auf die Patenterteilung: **05.05.2021**
(21) Anmeldenummer: 16201842.8
(22) Anmeldetag: 02.12.2016
(51) Int. Cl.: C08G 18/16, C08G 18/18, C08G 18/24, C08G 18/80, C08J 5/24, C08G 18/79, C08G 18/32

(54) **LAGERSTABILE 1K-POLYURETHAN-PREPREGS UND DARAUS HERGESTELLTE FORMKÖRPER AUS POLYURETHANZUSAMMENSETZUNG**
STORAGE STABLE 1K-POLYURETHANE-PREPREGS AND MOULDED ARTICLE MADE FROM SAME ON THE BASIS OF A POLYURETHANE COMPOSITION
PRÉIMPRÉGNÉ DE MONOCOMPOSANT POLYURÉTHANE STABLE AU STOCKAGE ET CORPS MOULÉS AINSI FABRIQUÉS À PARTIR DE LADITE COMPOSITION DE POLYURÉTHANE

(43) Veröffentlichungstag der Anmeldung: 06.06.2018
(73) Patentinhaber: Evonik Operations GmbH, 45128 Essen (DE)
(72) Erfinder: SPYROU, Emmanouil, 46514 Schermbeck (DE); LOESCH, Holger, 44627 Herne (DE); DIESVELD, Andrea, 48712 Gescher (DE); KREISCHER, Susanne, 45701 Herten (DE); LANGKABEL, Eike, 41844 Wegberg (DE); ALDRIDGE, Ralph, 48249 Dülmen (DE); GOLLAN, Elke, 44653 Herne (DE)
(74) Vertreter: Evonik Patent Association

(56) Entgegenhaltungen:
- DE-A1-102010 041 247
- DE-A1-102011 006 163
- US-A- 4 495 229

## Beschreibung

Die Erfindung betrifft lagerstabile 1K-Polyurethan-Prepregs und daraus hergestellte Formkörper.

Die 1K-Polyurethanzusammensetzungen sind insbesondere geeignet für die Herstellung von lagerstabilen Polyurethan-Prepregs und daraus hergestellte Formkörper (Composite-Bauteile). Die lagerstabilen Polyurethan-Prepregs sind erhältlich durch ein Verfahren mittels Imprägnierung in Form von Geweben und Gelegen unter Verwendung von diesen reaktiven Polyurethanzusammensetzungen

Verschiedene Formgebungsprozesse, wie z. B. das Reaction-Transfer-Moulding-(RTM)-Verfahren beinhalten die Einbringung der Verstärkungsfasern in eine Form, das Schließen der Form, das Einbringen der vernetzbaren Harzformulierung in die Form und die anschließende Vernetzung des Harzes, typischerweise durch Wärmezufuhr.

Eine der Beschränkungen eines solchen Prozesses ist das relativ schwierige Einlegen der Verstärkungsfasern in die Form. Die einzelnen Lagen des Gewebes oder Geleges müssen zugeschnitten und den unterschiedlichen Formgeometrien angepasst werden. Das kann sowohl zeitintensiv wie auch kompliziert sein, insbesondere wenn die Formkörper auch Schaum- oder andere Kerne enthalten sollen. Vorformbare Faserverstärkungen mit einfachem Handling und bestehenden Umformmöglichkeiten wären hier wünschenswert.

Faserverstärkte Materialien in Form von Prepregs werden bereits in vielen industriellen Anwendungen wegen ihrer bequemen Handhabung und der erhöhten Effizienz bei der Verarbeitung im Vergleich zu der alternativen wet-lay-up Technologie eingesetzt.

Industrielle Anwender solcher Systeme verlangen neben schnelleren Zykluszeiten und höheren Lagerstabilitäten auch bei Raumtemperatur auch eine Möglichkeit die Prepregs zuzuschneiden, ohne dass bei automatisiertem Zuschnitt und Lay-up der einzelnen Prepreg-Lagen die Schneidwerkzeuge mit der häufig klebrigen Matrixmaterial verunreinigt werden.

Neben Polyestern, Vinylestern und Epoxy-Systemen gibt es eine Reihe spezialisierter Harze im Bereich der vernetzenden Matrix-Systeme. Dazu zählen auch Polyurethan-Harze, die wegen ihrer Zähigkeit, Schadenstoleranz und die Festigkeit insbesondere zur Herstellung von Composite-Profilen über Pultrusionsverfahren eingesetzt werden. Als Nachteil wird häufig die Toxizität der verwendeten Isocyanate genannt.

Polyurethan-Composites weisen auch gegenüber Vinylestern, ungesättigten Polyesterharzen (UPE) oder UPE-Urethan-Hybrid-Harzen eine überlegene Zähigkeit auf.

Prepregs und daraus hergestellte Composites auf der Basis von Epoxy-Systemen werden zum Beispiel beschrieben in WO 98/50211, US 4,992,228, US 5,080,857, US 5,427,725, GB 2007676, GB 2182074, EP 309 221, EP 297 674, WO 89/04335, US 5,532,296 und US 4,377,657, US 4,757,120.

In WO 2006/043019 wird ein Verfahren zur Herstellung von Prepregs auf der Basis von Epoxidharz-Polyurethanpulvern beschrieben.

Des Weiteren sind Prepregs auf der Basis von pulverförmigen Thermoplasten als Matrix bekannt.

In US 2004/0231598 wird eine Methode beschrieben, bei der die Partikel über eine spezielle Beschleunigungskammer mit elektrostatischer Aufladung geführt werden. Diese Apparatur dient zur Beschichtung von Glas-, Aramid- oder Kohlefaser-Substraten für die Herstellung von Prepregs aus thermoplastischen Harzen. Als Harze werden Polyethylen (PE), Polypropylen (PP), Polyetheretherketon (PEEK), Polyethersulfon (PES), Polyphenylsulfon (PPS), Polyimid (PI), Polyamid (PA), Polycarbonat (PC), Polyethylenterephthalat (PET), Polyurethan (PU), Polyester und Fluorpolymere genannt. Die daraus hergestellten thermoplastischen Prepreg-Textilien zeigen inherente Zähigkeit, ein gutes viscoelastische Dämpfungsverhalten, eine unbegrenzte Lagerfähigkeit, gute Chemikalienbeständigkeit und Recyclierbarkeit.

In der WO 98/31535 wird eine Methode zur Pulverimprägnierung beschrieben, bei der die zu imprägnierenden Glas- oder Kohlefaserstränge mit einer Partikel/Flüssigkeits- bzw. Partikel/GasMischung in einem definierten Geschwindigkeitsprofil beaufschlagt werden. Dabei bestehen die Pulver aus keramischen bzw. thermoplastischen Materialien, unter anderem thermoplastisches Polyurethan.

In WO 99/64216 werden Prepregs und Composite und eine Methode zu deren Herstellung beschrieben, bei der Emulsionen mit so kleinen Polymerpartikeln verwendet werden, dass eine Einzelfaserumhüllung ermöglicht wird. Die Polymere der Partikel haben eine Viskosität von mindestens 5000 centipoise und sind entweder Thermoplaste oder vernetzende Polyurethan-Polymere.

In der EP 0590702 werden Pulverimprägnierungen zur Herstellung von Prepregs beschrieben, bei denen das Pulver aus einem Gemisch aus einem Themoplasten und einem reaktiven Monomer bzw. Prepolymeren besteht. Die WO 2005/091715 beschreibt ebenfalls die Verwendung von Thermoplasten zur Herstellung von Prepregs.

Michaeli et al. beschreibt die Entwicklung einer Pulvertechnologie für einen Pultrusionsprozess mit Thermoplastischen Polyurethanen, TPU genannt, in Coatings & Composite Materials , Nr.19, p37 - 39, 1997. Weiterhin werden in dem Artikel Processing and properties of thermoplastic polyurethane prepreg. (Ma, C. C. M.; Chiang, C. L. Annual Technical Conference - Society of Plastics Engineers (1991), 49th 2065-9.) Thermoplastische Polyurethan (TPU) Prepregs auf Basis von Lösemitteln und Wasser enthaltenden TPU-Systemen offenbart.

Prepregs mit einer Matrix auf der Basis von 2-Komponenten-Polyurethanen (2-K-PUR) sind bekannt.

Die Kategorie der 2-K-PUR umfasst im Wesentlichen die klassischen reaktiven Polyurethan-HarzSysteme. Prinzipiell handelt es sich um ein System aus zwei getrennten Komponenten. Während der maßgebende Bestandteil der einen Komponente immer ein Polyisocyanat ist, sind dies bei der zweiten Polyole bzw. bei neueren Entwicklungen auch Amino- oder Amin-Polyol-Gemische. Beide Teile werden erst kurz vor der Verarbeitung miteinander vermischt. Danach erfolgt die chemische Aushärtung durch Polyadition unter Bildung eines Netzwerkes aus Polyurethan bzw. Polyharnstoff. 2-Komponenten-Systeme haben nach dem Vermischen beider Bestandteile eine begrenzte Verarbeitungszeit (Standzeit, Potlife), da die einsetzende Reaktion zur allmählichen Viskositätserhöhung und schließlich zur Gelierung des Systems führt. Zahlreiche Einflussgrößen bestimmen dabei die effektive Zeit seiner Verarbeitbarkeit: Reaktivität der Reaktionspartner, Katalysierung, Konzentration, Löslichkeit, Feuchtegehalt, NCO/OH-Verhältnis und Umgebungstemperatur sind die wichtigsten [Lackharze, Stoye/Freitag, Hauser-Verlag 1996, Seiten 210/212]. Der Nachteil der Prepregs auf der Basis derartiger 2-K-PUR-Systeme ist, dass nur eine kurze Zeit zur Verarbeitung des Prepreg zu einem Composite zur Verfügung steht. Deshalb sind derartige Prepregs nicht über mehrere Stunden geschweige denn Tage lagerstabil.

Im Folgenden folgt eine Beschreibung der Polyurethan-Prepregs bzw. -Composite auf der Basis von 2-K-PUR-Systemen. In dem Artikel von K.Recker wird über die Entwicklung eines 2-KPolyurethansystems für das Harzmattenverfahren unter besonderer Berücksichtigung der Verarbeitungseigenschaften für SMC-Bauteile berichtet. (Baypreg - ein neuer POLYURETHAN-Werkstoff für das Harzmattenverfahren , Recker, Klaus, Kunststoffe-Plastics 8,1981).

Die WO 2005/049301 offenbart ein katalytisch aktiviertes 2-K-PUR-System, wobei die Polyisocyanat-Komponente und das Polyol gemischt werden und mittels Pultrusion zu einem Composite verarbeitet werden.

In der WO 2005/106155 werden faserverstärkte Composites für die Bau-Industrie offenbart, die mittels der Long-Fiber-Injection (LFI) Technologie mit 2-KPolyurethan-Systemen hergestellt werden.

In der JP 2004196851 werden Composites beschrieben, die aus Carbonfasern und organischen Fasern, wie z. B. Hanf, unter Verwendung einer Matrix aus 2-K-PUR auf der Basis von polymeren Methylendiphenyldiisocyanat (MDI) und speziellen OH-Gruppen haltigen Verbindungen hergestellt werden.

Die EP 1 319 503 beschreibt Polyurethan-Composites, wobei spezielle Polyurethan-Deckschichten für ein mit einem 2K-PUR-Harz getränktes Faser-Laminat, das eine Kernschicht (z. B. eine Papierwabe) umhüllt, verwendet werden. Das 2K-PUR-Harz besteht z. B. aus MDI und einer Mischung aus Polypropylentriolen und Diolen von Ethylenoxid-Propylenoxid-Copolymeren.

In der WO 2003/101719 werden Polyurethanbasierte Composites und die Methoden zur Herstellung beschrieben. Es handelt sich um 2-K-Polyurethanharze mit definierten Viskositäten und bestimmten Gelzeiten.

2-K-PUR-Systeme werden ebenfalls abgehandelt in: "Fiber reinforced polyurethane composites: shock tolerant components with particular emphasis on armor plating" (Ratcliffe, Colin P.; Crane, Roger M.; Santiago, Armando L., AMD (1995), 211 (Innovative Processing and Characterization of Composite Materials), 29-37.) und in Fiber-reinforced polyurethane composites. I. Process feasibility and morphology. (Ma, Chen Chi M.; Chen, Chin Hsing. International SAMPE Symposium and Exhibition (1992), 37 (Mater. Work. You 21st Century), 1062-74.)

Von der unterschiedlichen Bindemittelbasis abgesehen entsprechen feuchtigkeitshärtende Lacke sowohl in ihrer Zusammensetzung als auch in ihren Eigenschaften weitgehend analogen 2K-Systemen. Es werden im Prinzip die gleichen Lösemittel, Pigmente, Füllstoffe und Hilfsmittel verwendet. Anders als 2K-Lacke tolerieren diese Systeme vor ihrer Applikation aus Stabilitätsgründen keinerlei Feuchtigkeit.

Bekannt sind auch physikalisch trocknende Systeme auf der Basis von nichtreaktiven PUR-Elastomeren. Es handelt sich hierbei um höhermolekulare, lineare, thermoplastische Urethane aus Diolen und Diisocyanaten, vorzugsweise MDI, TDI, HDI und IPDI. Solche thermoplastischen Systeme weisen in der Regel sehr hohe Viskositäten und damit auch sehr hohe Verarbeitungstemperaturen auf. Dies erschwert den Einsatz für Prepregs maßgeblich. Bei der Herstellung von Prepregs mit Faserverbunden ist der Einsatz von Pulvern bei reaktiven Systemen eher unüblich und beschränkt sich bislang auf wenige Einsatzgebiete. Das wohl gängigste Verfahren, um ein Pulver auf eine Faseroberfläche zu bringen, ist das Wirbelbettverfahren (fluidized bed impregnation). Durch eine aufwärts gerichtete Strömung werden Pulverpartikel in einen Zustand versetzt, in dem sie fluid-ähnliche Eigenschaften aufweisen. Dieses Verfahren wird in der EP 590 702 angewandt. Dabei werden die Stränge einzelner Faserbündel auseinander geflochten und im Wirbelbett mit dem Pulver beschichtet. Das Pulver besteht dabei aus einer Mischung aus reaktivem und thermoplastischem Pulver, um so die Eigenschaften der Matrix zu optimieren. Einzelne Rovings (Faserbündel) werden schließlich zusammengelegt und mehrere Lagen bei einem Druck von 16 bar für etwa 20 Minuten verpresst. Die Temperaturen variieren zwischen 250 und 350 °C. Häufig kommt es allerdings beim Wirbelbettverfahren zu unregelmäßiger Beschichtung, insbesondere wenn die Stränge nicht auseinander gezogen werden.

Diesbezüglich wird in der US 20040231598 eine Methode vorgestellt, die ähnlich dem Wirbelbettverfahren funktioniert. Dabei transportiert ein Luftstrom die Partikel zum Substrat und es erfolgt durch einen speziellen Aufbau eine gleichmäßige Abscheidung des Pulvers.

Ein weiteres Verfahren beschreibt die, US 20050215148. Dort werden mit der eben erwähnten Vorrichtung gleichmäßige Verteilungen des Pulvers auf der Faser erreicht. Die Partikelgröße reicht dabei von 1 bis 2000 µm. Beschichtet wird bei mehreren Versuchen von einer oder von zwei Seiten. Durch die gleichmäßige Aufbringung des Pulvers werden nach einem anschließenden Verpressen der Prepregs Laminate ohne Lufteinschlüsse erzeugt.

Eine weitere Anmeldung, WO 2006/043019 beschreibt die Anwendung von epoxy- und aminoterminierten Harzen in Pulverform. Dabei werden die Pulver vermischt und auf die Fasern gegeben. Anschließend werden die Partikel angesintert. Die Partikelgröße liegt zwischen 1 und 3000 µm, vorzugsweise aber zwischen 1 und150 µm.

Diese Einschränkung der Partikelgröße auf eher kleine Durchmesser wird auch in einer Studie der Michigan State University empfohlen. Dabei ist die Theorie, dass Partikel mit kleinen Durchmessern eher in Hohlräume zwischen einzelnen Filamenten eindringen können als Partikel mit großen Durchmessern (S. Padaki, L.T. Drzal: a simulation study on the effects of particle size on the consolidation of polymer powder impregnated tapes, Department of Chemical Engineering, Michigan State University, Composites: Part A (1999), pp. 325-337).

Neben der Prepregtechnik werden auch in anderen klassischen Verfahren reaktive Pulver-Systeme eingesetzt, so beispielsweise in der Wickeltechnik [M.N. Ghasemi Nejhad, K.M. Ikeda: Design, manufacture and characterization of composites using on-line recycled thermoplastic powder impregnation of fibres and in-situ filament winding, Department of Mechanical Engineering, University of Hawaii at Manoa, Journal of Thermoplastic Composite Materials, Vol 11, pp. 533-572, November 1998] oder beim Pultrusionsverfahren. Für das Pultrusionsverfahren werden beispielsweise Faserseile (Towpregs) mit dem Pulver beschichtet und zunächst als sogenannte Towpregs aufgewickelt und gelagert. Eine Möglichkeit zur Herstellung ist in einem Artikel des SAMPE Journal's beschrieben [R.E. Allred, S. P. Wesson, D. A. Babow: powder impregnation studies for high temperature towpregs, Adherent Technologies, SAMPE Journal, Vol. 40, No. 6, pp. 40-48, November/ December 2004]. In einer weiteren Untersuchung wurden solche Towpregs durch das Pultrusionsverfahren zusammen gepresst und ausgehärtet zu Werkstoffbauteilen [N.C. Parasnis, K. Ramani, H.M. Borgaonkar: Ribbonizing of electrostatic powder spray impregnated thermoplastic tows by pultrusion, School of Mechanical Engineering, Purdue University, composites, Part A, Applied science and manufacturing, Vol. 27, pp. 567-574, 1996]. Obwohl die Herstellung von Towpregs und anschließende Verpressung im Pultrusionsverfahren bereits mit duroplastischen Systemen durchgeführt wurde, werden bei diesem Verfahren bislang größtenteils nur thermoplastische Systeme eingesetzt.

Lagerstabile Polyurethan-Prepregs und daraus hergestellte Formkörper sind aus der DE 102009001793 und der DE 102009001806 bekannt. In DE 102009001793 und DE 102009001806 wird ein Verfahren zur Herstellung von lagerstabilen Prepregs, im Wesentlichen aufgebaut aus A) mindestens einem Faser förmigen Träger und B) mindestens einer reaktiven pulverförmigen Polyurethanzusammensetzung als Matrixmaterial beschrieben, die aus mindestens einer Polyurethankomponente und mindestens einer Harzkomponente bestehen. Gegenstand von DE 102010029355 ist der Schmelzauftrag von Polyurethanprepreg-Systemen, in DE 102010030233 werden mäandrienrende Polyurethanprepreg-Systeme beschrieben. Die DE 102010030234 führt lösemittelhaltige Polyurethanprepreg-Systeme auf. DE 102010041239 beansprucht farbige Polyurethanprepreg-Systeme. DE 102010041256 wiederum handelt von Polyurethanprepreg-Systeme an fixierten Folien während die DE 102010041243. Polyurethanprepreg-Systeme mit einem Faservolumenanteil von weniger als 50 % beschreibt. Die DE102011006163 beschreibt die Verwendung einer flüssigen Harzkomponente.

Allen diesen Dokumenten ist gemein, dass die dort beschriebenen Matrixformulierungen aus einer Polyurethankomponente und einer Harzkomponente bestehen.

Die Aufgabe war es, ein einfacheres Verfahren zur Herstellung von problemlos zu handhabenden polyurethanbasierenden Prepreg-Systemen auf der Basis von Polyurethanzusammensetzungen zu finden. Weitere Aufgabe dieser Erfindung war es, Prepregs mit Polyurethan-Matrixmaterial zu finden, welche mit einem einfachen Verfahren hergestellt werden können, wobei das Hauptaugenmerk auf das Handling und die Lagerungsfähigkeit der Prepregs gelegt werden sollte. Für die Herstellung der Prepregs wäre es vorteilhaft, wenn die Viskosität von Zubereitungen der unvernetzten Matrixmaterialien gering genug ist, um bei der Herstellung des Composite-Bauteils eine Benetzung des Faser förmigen Trägers mit ausreichendem Faservolumenanteil zu gewährleisten.

Überraschend wurde nun gefunden, dass diese beschriebenen Anwendungen im Bereich der imprägnierten, reaktiven und lagerstabilen Polyurethan-Prepregs besonders vorteilhaft verwirklicht werden können, wenn dabei lediglich eine reaktive Polyurethankomponente ohne Harzkomponente verwendet wird, wobei der Tg < 40 °C ist. Der verarbeitungstechnische Vorteil offenbart sich dabei sowohl bei der Herstellung der Prepregs als auch bei der anschließenden Verpressung zu Compositbauteilen im Sinne einer einfacheren Verarbeitbarkeit. Bei dem nachfolgenden Verpressen zu Compositen führt die 1K-Polyurethanzusammensetzung zu einem verbesserten Verlauf innerhalb der Schichten und damit zu überlegenen Materialeigenschaften.

Zudem kann durch die niedrigere Viskosität des Matrixmaterials bei höheren Temperaturen das Verpressen zum Compositebauteil bei niedrigeren Drücken durchgeführt werden, was die Herstellung erleichtert.

Man erhält so Prepregs mit zumindest gleichen aber auch verbesserten wie in DE102011006163 beschriebenen Verarbeitungseigenschaften, die für die Herstellung leistungsfähiger Composite für verschiedenste Anwendungen im Bereich der Bau-, der Automobil-, der Luft- und Raumfahrt-Industrie, der Energietechnik (Windkraftanlagen) und im Boots- und Schiffbau eingesetzt werden können. Die erfindungsgemäß verwendbaren reaktiven Polyurethanzusammensetzungen sind umweltfreundlich, kostengünstig, weisen gute mechanische Eigenschaften auf, lassen sich einfach verarbeiten und zeichnen sich nach Härtung durch eine gute Wetterbeständigkeit wie durch ein ausgewogenes Verhältnis zwischen Härte und Flexibilität aus.

Gegenstand der Erfindung sind Prepregs im Wesentlichen aufgebaut aus
A) mindestens einem Faser förmigen Träger und
B) mindestens einer 1K-Polyurethanzusammensetzung,
wobei die Polyurethanzusammensetzung mit einem Tg von kleiner 40 °C, ermittelt gemäß DIN EN ISO 11357-1 im Wesentlichen intern blockierte und/oder mit Blockierungsmitteln blockierte Di- und/oder Polyisocyanate und/oder deren Polyadditionsverbindungen, enthält.

Die Glasübergangstemperatur Tg und der Schmelzpunkt wird gemäß DIN EN ISO 11357-1 und DIN 53765 ermittelt.

Die erfindungsgemäßen Prepregs weisen nach Abkühlung auf Raumtemperatur eine sehr hohe Lagerstabilität bei Raumtemperatur auf. Diese beträgt je nach enthaltener reaktiver Polyurethanzusammensetzung und Katalyse mindestens einige Tage bei Raumtemperatur, aber in der Regel sind die Prepregs mehrere Wochen oder sogar Monate bei 40 °C und darunter lagerstabil. Die so hergestellten Prepregs sind meist nicht klebrig und daher sehr gut zu handhaben und weiter zu verarbeiten. Die erfindungsgemäß eingesetzten reaktiven oder hochreaktiven Polyurethanzusammensetzungen weisen demnach eine sehr gute Haftung und Verteilung auf dem Faser förmigen Träger auf.

Während der Weiterverarbeitung der Prepregs zu Composites (Verbundwerkstoffen) z. B. durch Verpressen bei erhöhten Temperaturen, erfolgt eine sehr gute Imprägnierung des Faser förmigen Trägers, dadurch bedingt, dass die dabei flüssig niedrig viskosen reaktiven oder hochreaktiven Polyurethanzusammensetzungen vor der Vernetzungsreaktion die Faser des Trägers sehr gut benetzen, bevor durch die Vernetzungsreaktion der reaktiven oder hochreaktiven Polyurethanzusammensetzung bei erhöhten Temperaturen eine Vergelung eintritt beziehungsweise die komplette Polyurethanmatrix durchhärtet.

Je nach Zusammensetzung der verwendeten reaktiven oder hochreaktiven Polyurethanzusammensetzung und gegebenenfalls zugesetzten Katalysatoren können sowohl die Geschwindigkeit der Vernetzungsreaktion bei der Herstellung der Composite-Bauteile als auch die Eigenschaften der Matrix in weiten Bereichen variiert werden.

Als Matrixmaterial wird im Rahmen der Erfindung die zur Herstellung der Prepregs eingesetzte reaktive oder hochreaktive Polyurethanzusammensetzung definiert und bei der Beschreibung der Prepregs die auf der Faser durch das erfindungsgemäße Verfahren aufgebrachte noch reaktive oder hochreaktive Polyurethanzusammensetzung.

Die Matrix ist definiert als die im Composite vernetzten Matrixmaterialien aus den reaktiven oder hochreaktiven Polyurethanzusammensetzungen.

### Träger

Der Faser förmige Träger in der vorliegenden Erfindung besteht aus Faser förmigem Material (auch häufig Verstärkungsfasern genannt). Im Allgemeinen ist jegliches Material, aus dem die Fasern bestehen, geeignet, bevorzugt wird jedoch Faser förmiges Material aus Glas, Kohlenstoff, Kunststoffen, wie z. B. Polyamid (Aramid) oder Polyester, Naturfasern oder mineralischen Fasermaterialien wie Basaltfasern oder keramische Fasern (Oxidische Fasern auf Basis von Aluminiumoxiden und/oder Siliciumoxiden) verwendet. Auch Mischungen von Fasertypen, wie z. B. Gewebe-Kombinationen aus Aramid- und Glasfasern, oder Kohlenstoff- und Glasfasern, können verwendet werden. Ebenso sind Hybrid-Composite-Bauteile mit Prepregs aus unterschiedlichen Faser förmigen Trägern herstellbar.

Glasfasern sind hauptsächlich wegen ihres relativ geringen Preises die am häufigsten verwendeten Fasertypen. Prinzipiell sind hier alle Arten von glasbasierenden Verstärkungsfasern geeignet (E-Glas-, S-Glas-, R-Glas-, M-Glas-, C-Glas-, ECR-Glas-, D-Glas-, AR-Glas-, oder Hohlglasfasern). Kohlenstofffasern kommen im Allgemeinen in Hochleistungsverbundverstoffen zum Einsatz, wo auch die im Verhältnis zur Glasfaser niedrigere Dichte bei gleichzeitig hoher Festigkeit ein wichtiger Faktor ist. Kohlenstofffasern (auch Carbonfasern) sind industriell hergestellte Fasern aus kohlenstoffhaltigen Ausgangsmaterialien, die durch Pyrolyse in graphitartig angeordneten Kohlenstoff umgewandelt werden. Man unterscheidet isotrope und anisotrope Typen: isotrope Fasern besitzen nur geringe Festigkeiten und geringere technische Bedeutung, anisotrope Fasern zeigen hohe Festigkeiten und Steifigkeiten bei gleichzeitig geringer Bruchdehnung. Als Naturfasern werden hier alle Textilfasern und Faserwerkstoffe bezeichnet, die aus pflanzlichem und tierischem Material gewonnen werden (z. B. Holz-, Zellulose-, Baumwoll-, Hanf-, Jute-, Leinen-, Sisal-, Bambusfasern). Aramid-Fasern weisen, ähnlich wie auch Kohlenstofffasern, einen negativen Wärmeausdehnungs-koeffizienten auf, werden also bei Erwärmung kürzer. Ihre spezifische Festigkeit und ihr Elastizitätsmodul ist deutlich niedriger als jene von Kohlenstofffasern. In Verbindung mit dem positiven Ausdehnungskoeffizienten des Matrixharzes lassen sich hoch maßhaltige Bauteile fertigen. Gegenüber Kohlenstofffaser verstärkten Kunststoffen ist die Druckfestigkeit von Aramidfaser-Verbundwerkstoffen deutlich geringer. Bekannte Markennamen für Aramidfasern sind Nomex® und Kevlar® von DuPont, oder Teijinconex®, Twaron® und Technora® von Teijin. Besonders geeignet und bevorzugt sind Träger aus Glasfasern, Kohlenstofffasern, Aramidfasern oder keramische Fasern. Bei dem Faser förmigen Material handelt es sich um ein textiles Flächengebilde. Geeignet sind textile Flächengebilde aus Vlies, ebenso sogenannte Maschenware, wie Gewirke und Gestricke, aber auch nicht maschige Gebinde wie Gewebe, Gelege oder Geflechte. Außerdem unterscheidet man Langfaser- und Kurzfasermaterialien als Träger. Ebenfalls erfindungsgemäß geeignet sind Rovings und Garne. Alle genannten Materialien sind im Rahmen der Erfindung als Faser förmiger Träger geeignet. Einen Überblick über Verstärkungsfasern enthält "Composites Technologien, Paolo Ermanni (Version 4), Script zur Vorlesung ETH Zürich, August 2007, Kapitel 7".

### Matrixmaterial

Prinzipiell sind alle, auch sonstige bei Raumtemperatur lagerstabilen reaktiven Polyurethanzusammensetzungen als Matrixmaterialen geeignet. Geeignete Polyurethanzusammensetzungen enthalten erfindungsgemäß temporär deaktivierte, das heißt intern blockierte und/oder mit Blockierungsmitteln blockierte Di- oder Polyisocyanate.

Die erfindungsgemäß eingesetzten Di- und Polyisocyanate können aus beliebigen aromatischen, aliphatischen, cycloaliphatischen und/oder (cyclo)aliphatischen Di- und/oder Polyisocyanaten bestehen.

Als aromatische Di- oder Polyisocyanate sind prinzipiell alle bekannten aromatischen Verbindungen geeignet. Besonders geeignet sind 1,3- und 1,4-Phenylendiisocyanat, 1,5-Naphthylen-diisocyanat, Toluidindiisocyanat, 2,6-Toluylendiisocyanat, 2,4-Toluylendiisocyanat (2,4-TDI), 2,4'-Diphenylmethandiisocyanat (2,4'-MDI), 4,4'-Diphenylmethandiisocyanat, die Mischungen aus monomeren Diphenylmethandiisocyanaten (MDI) und oligomeren Diphenylmethandiisocyanaten (Polymer-MDI), Xylylendiisocyanat, Tetramethylxylylendiisocyanat und Triisocyanatotoluol.

Geeignete aliphatische Di- oder Polyisocyanate besitzen vorteilhafterweise 3 bis 16 Kohlenstoffatome, vorzugsweise 4 bis 12 Kohlenstoffatome, im linearen oder verzweigten Alkylenrest und geeignete cycloaliphatische oder (cyclo)aliphatische Diisocyanate vorteilhafterweise 4 bis 18 Kohlenstoffatome, vorzugsweise 6 bis 15 Kohlenstoffatome, im Cycloalkylenrest.

Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweisen, z. B. H₁₂MDI.

Geeignete aliphatische Di- oder Polyisocyanate sind Cyclohexandiisocyanat, Methylcyclohexandiisocyanat, Ethylcyclohexandiisocyanat, Propylcyclohexandiisocyanat, Methyldiethylcyclohexandiisocyanat, Propandiisocyanat, Butandiisocyanat, Pentandiisocyanat, Hexandiisocyanat, Heptandiisocyanat, Octandiisocyanat, Nonandiisocyanat, Nonantriisocyanat, wie 4-Isocyanatomethyl-1,8-octandiisocyanat (TIN), Dekandi- und triisocyanat, Undekandi- und - triisocyanat, Dodecandi- und -triisocyanate. Ebenfalls geeignet sind 4-Methyl-cyclohexan-1,3-diisocyanat, 2-Butyl-2-ethylpentamethylen-diisocyanat, 3(4)-Isocyanatomethyl-1-methylcyclohexylisocyanat, 2-Isocyanatopropylcyclohexyl-isocyanat, 2,4'-Methylenbis(cyclohexyl)diisocyanat, 1,4-Diisocyanato-4-methyl-pentan.

Selbstverständlich können auch Gemische der Di- und Polyisocyanate eingesetzt werden.

Weiterhin werden vorzugsweise Oligo- oder Polyisocyanate verwendet, die sich aus den genannte Di- oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen. Besonders geeignet sind Isocyanurate, insbesondere aus IPDI und/oder HDI.

Die erfindungsgemäß verwendeten Polyisocyanate sind blockiert.

In diesem Fall handelt es sich um die reaktive Polyurethanzusammensetzung gemäß der Erfindung.

In Frage kommen dazu externe Blockierungsmittel, wie z. B. Acetessigsäureethylester, Diisopropylamin, Methylethylketoxim, Malonsäurediethylester, ε-Caprotactam, 1,2,4-Triazol, Phenol bzw. substituierte Phenole und 3,5-Dimethylpyrazol.

Die bevorzugt verwendeten Polyisocyanate sind IPDI-Addukte, die Isocyanurat-Gruppierungen und ε-Caprolactam blockierte Isocyanatstrukturen enthalten.

Auch eine interne Blockierung ist möglich und diese wird bevorzugt verwendet. Die interne Blockierung erfolgt über eine Dimerbildung über Uretdion-Strukturen, die bei erhöhter Temperatur wieder in die ursprünglich vorhandenen Isocyanat-Strukturen zurückspalten und damit die Vernetzung mit dem Binder in Gang setzen.

Optional können die reaktiven Polyurethanzusammensetzungen zusätzliche Katalysatoren enthalten. Es handelt sich hierbei um metallorganischen Katalysatoren, wie z. B. Dibutylzinndilaurat (DBTL), Zinnoctoat, Bismuthneodecanoat, oder aber tertiäre Amine, wie z. B. 1,4-Diazabicylco[2.2.2.]octan, in Mengen von 0,001 - 1 Gew.-%. Diese erfindungsgemäß eingesetzten reaktiven Polyurethanzusammensetzungen werden bei normalen Bedingungen, z. B. mit DBTL-Katalyse, ab 160 °C, üblicherweise ab ca. 180 °C ausgehärtet.

Für die Herstellung der reaktiven Polyurethanzusammensetzungen können die in der Pulverlacktechnologie üblichen Zusatzstoffe, wie Verlaufsmittel, z. B. Polysilicone oder Acrylate, Lichtschutzmittel z. B. sterisch gehinderte Amine, oder andere Hilfsmittel, wie sie z. B. in EP 669 353 beschrieben wurden, in einer Gesamtmenge von 0,05 bis 5 Gew.-% zugesetzt werden. Füllstoffe und Pigmente wie z. B. Titandioxid oder Farbstoffe können in einer Menge bis zu 50 Gew.-% der Gesamtzusammensetzung zugesetzt werden.

Reaktiv (Variante I) bedeutet im Rahmen dieser Erfindung, dass die erfindungsgemäß eingesetzten reaktiven Polyurethanzusammensetzungen wie oben beschrieben bei Temperaturen ab 160 °C, und zwar je nach Art des Trägers aushärten.

Die erfindungsgemäß eingesetzten reaktiven Polyurethanzusammensetzungen werden bei normalen Bedingungen, z. B. mit DBTL-Katalyse, ab 160 °C, üblicherweise ab ca. 180 °C ausgehärtet. Die Zeit zur Aushärtung der erfindungsgemäß eingesetzten Polyurethanzusammensetzung liegt in der Regel innerhalb von 5 bis 60 Minuten.

Bevorzugt wird bei der vorliegenden Erfindung eine 1K-Polyurethanzusammensetzung B) mit Tg < 40 °C, ermittelt gemäß DIN EN ISO 11357-1, eingesetzt, die eine hochreaktive Uretdiongruppen haltige Polyadditionsverbindung a) enthält.

Bevorzugt wird bei der vorliegenden Erfindung eine 1K-Polyurethanzusammensetzung B) mit Tg < 40 °C, ermittelt gemäß DIN EN ISO 11357-1, eingesetzt, im Wesentlichen enthaltend
a) mindestens einen Uretdiongruppen haltige Polyadditionsverbindungen, basierend auf der Polyadditionsreaktion aus aliphatischen, (cyclo)aliphatischen oder cycloaliphatischen Uretdiongruppen enthaltende Polyisocyanaten und hydroxylgruppenhaltigen Verbindungen, wobei die Polyadditionsverbindung einen freien NCO-Gehalt von kleiner 5 Gew.-% und einem Uretdiongehalt von 3 - 25 Gew.-% aufweist,
b) gegebenenfalls mindestens einen Katalysator,
c) gegebenenfalls aus der Polyurethanchemie bekannte Hilfs- und Zusatzstoffe.

Uretdiongruppen enthaltende Polyisocyanate sind wohlbekannt und werden beispielsweise in US 4,476,054, US 4,912,210, US 4,929,724 sowie EP 417 603 beschrieben. Ein umfassender Überblick über industriell relevante Verfahren zur Dimerisierung von Isocyanaten zu Uretdionen liefert das J. Prakt. Chem. 336 (1994) 185-200. Im Allgemeinen erfolgt die Umsetzung von Isocyanaten zu Uretdionen in Gegenwart löslicher Dimerisierungskatalysatoren wie z. B. Dialkylaminopyridinen, Trialkylphosphinen, Phosphorigsäure-triamiden oder Imidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten eine breite Palette von Isocyanaten geeignet. Es können die oben genannten Di-und Polyisocyanate verwendet werden. Bevorzugt sind aber Di- und Polyisocyanate aus beliebigen aliphatischen, cycloaliphatischen und/oder (cyclo)aliphatischen Di- und/oder Polyisocyanaten.

Bevorzugt werden Isophorondiisocyanat (IPDI), Hexamethylendiisocyanat (HDI), 4,4'-Diisocyanatodicyclohexylmethan, 2,4'-Diisocyanatodicyclohexylmethan, 2,2'-Diisocyanatodicyclohexylmethan allein oder in Mischungen der Isomeren (H₁₂MDI), 2-Methylpentandiisocyanat (MPDI), 2,2,4-Trimethylhexamethylendiisocyanat, 2,4,4-Trimethylhexamethylendiisocyanat sowie deren Gemische, (TMDI), Norbornandiisocyanat (NBDI), allein oder in Mischungen, zur Herstellung der Uredione eingesetzt.

Ganz besonders bevorzugt werden IPDI, HDI, TMDI und H₁₂MDI eingesetzt, allein oder in Mischungen. In einer besonders bevorzugten Ausführungsform werden IPDI und/oder 4,4'-H12MDI und/oder HDI und/oder ein Gemisch von 2,2,4-TMDI und 2,4,4-TMDI eingesetzt.

Ganz besonders bevorzugt wird das Uretdion von IPDI und/oder HDI verwendet.

Es können auch Mischungen von beliebigen Uretdionen eingesetzt werden

Die Umsetzung dieser Uretdiongruppen enthaltenden Polyisocyanate zu Uretdiongruppen haltigen Polyurethanzusammensetzung beinhaltet die Reaktion der freien NCO-Gruppen mit hydroxylgruppenhaltigen Monomeren oder Polymeren, wie z. B. Polyestern, Polythioethern, Polyethern, Polycaprolactamen, Polyepoxiden, Polyesteramiden, Polyurethanen oder niedermolekularen Di-, Tri- und/oder Tetraalkoholen als Kettenverlängerer und gegebenenfalls Monoaminen und/oder Monoalkoholen als Kettenabbrecher und wurde schon häufig beschrieben (EP 669 353, EP 669 354, DE 30 30 572, EP 639 598 oder EP 803 524).

Bevorzugte Uretdiongruppen aufweisende Polyadditionsverbindungen haben einen freien NCO-Gehalt von weniger als 5 Gew.-% und einen Gehalt an Uretdiongruppen von 3 bis 25 Gew.-%, bevorzugt 6 bis 18 Gew.-% (berechnet als C₂N₂O₂, Molekulargewicht 84). Bevorzugt werden Polyester und monomere Di- oder Polyalkohole. Außer den Uretdiongruppen können die Polyurethanzusammensetzung auch Isocyanurat-, Biuret-, Allophanat-, Urethan- und/oder Harnstoff-Strukturen aufweisen.

Bevorzugt wird in der Reaktion zur Bildung der uretdionhaltigen Polyadditionsverbindung das Verhältnis aus der Summe aus latenten und freien NCO-Gruppen und der gegenüber Isocyanate reaktiven Reaktionspartner (z.B. Polyole) so gewählt, dass NCO (frei + latent)/OH = 1,8:1 bis 1:1,8 ist, besonders bevorzugt 1,2:1 bis 1:1,2.

Dabei werden in diesem Schritt lediglich die freien NCO-Gruppen umgesetzt, nicht aber die latenten. Dazu darf die Reaktionstemperatur 120 °C nicht überschreiten, bevorzugt darf eine Temperatur von 80 °C nicht überschritten werden.

Die Herstellung der Uretdionhaltigen Polyadditionsverbindung a) kann in geeigneten Aggregaten, wie z. B. beheizbaren Rührkesseln, Knetern, oder auch Extrudern, erfolgen. Dabei können auch übliche PUR-Katalysatoren (s.u.) wie unter b) eingesetzt werden und/oder auch aprotische Lösemittel. Beispielhaft seien hier genannt: Ketone (Aceton, Methylethylketon, Methylisobutylketon, Cyclohexanon), Ether (Tetrahydrofuran), Ester (n-Propylacetat, n-Butylacetat, Isobutylacetat, 1,2-Propylencarbonat, Propylenglykol-Methylether-Acetat).

Optional können in den erfindungsgemäßen reaktiven Polyurethanzusammensetzungen B) zusätzliche Katalysatoren b) enthalten sein. Es handelt sich hierbei um metallorganischen Katalysatoren, wie z. B. Dibutylzinndilaurat, Zinkoctoat, Bismuthneodecanoat, oder aber tertiäre Amine, wie z. B. 1,4-Diazabicylco[2.2.2.]octan, in Mengen von 0,001 - 1 Gew.-%. Diese erfindungsgemäß eingesetzten reaktiven Polyurethanzusammensetzungen werden nach Imprägnierung der Faser bei normalerweise, z. B. mit DBTL-Katalyse, ab 160 °C, üblicherweise ab ca. 180 °C ausgehärtet und als Variante I bezeichnet.

Für die Herstellung der erfindungsgemäßen reaktiven Polyurethanzusammensetzungen können die in der Lack-, Klebstoff- und Dichtstofftechnologie üblichen Zusatzstoffe c) wie Verlaufsmittel, z. B. Polysilicone oder Acrylate, Lichtschutzmittel z. B. sterisch gehinderte Amine, oder andere Hilfsmittel, wie sie z. B. in EP 669 353 beschrieben wurden, in einer Gesamtmenge von 0,05 bis 5 Gew.-% zugesetzt werden. Füllstoffe und Pigmente wie z. B. Titandioxid können in einer Menge bis zu 30 Gew.-% der Gesamtzusammensetzung zugesetzt werden.

Die erfindungsgemäß eingesetzten reaktiven 1K-Polyurethanzusammensetzungen bieten einen sehr guten Verlauf und damit eine gute Imprägnierfähigkeit auf Fasern und im ausgehärteten Zustand eine ausgezeichnete Chemikalienbeständigkeit. Bei Verwendung von aliphatischen Vernetzern (z. B. IPDI oder H12MDI) wird zusätzlich noch eine gute Witterungsbeständigkeit erreicht.

Besonders bevorzugt wird bei der Erfindung eine 1K-Polyurethanzusammensetzung B) eingesetzt aus
B) mindestens einer Uretdiongruppen haltigen 1K-Polyurethanzusammensetzung mit Tg< 40 °C, ermittelt gemäß DIN EN ISO 11357-1, im Wesentlichen enthaltend
   a) mindestens einen Uretdiongruppen haltige Polyadditionsverbindung
      und
   b) gegebenenfalls mindestens einen PUR-Katalysator,
   c) gegebenenfalls aus der Polyurethanchemie bekannte Hilfs- und Zusatzstoffe,
   d) 0,1 bis 5 Gew.-% mindestens einen Katalysator ausgewählt aus quarternären Ammoniumsalzen und/oder quarternären Phosphoniumsalzen mit Halogenen, Hydroxiden, Alkoholaten oder organischen oder anorganischen Säureanionen als Gegenion,
      und
   e) 0,1 bis 5 Gew.-% mindestens einen Co-Katalysator, ausgewählt aus
      e1) mindestens einem Epoxid
         und/oder
      e2) mindestens einem Metallacetylacetonat und/oder quarternären Ammoniumacetylacetonat und/oder quarternären Phosphoniumacetylacetonat.

Ganz besonders bevorzugt wird eine 1K-Polyurethanzusammensetzung B) eingesetzt aus
B) mindestens einer Uretdiongruppen haltigen 1K-Polyurethanzusammensetzung mit Tg < 40 °C, ermittelt gemäß DIN EN ISO 11357-1, im Wesentlichen enthaltend
   a) mindestens einen Uretdiongruppen haltige Polyaddtionsverbindung basierend auf Polyadditionsverbindungen aus aliphatischen, (cyclo)aliphatischen oder cycloaliphatischen Uretdiongruppen enthaltenen Polyisocyanaten und hydroxylgruppenhaltigen Verbindungen, wobei die Polyadditionsverbindung einen freien NCO-Gehalt von kleiner 5 Gew.-% und einem Uretdiongehalt von 3 - 25 Gew.-% aufweist,
      und
   b) gegebenenfalls mindestens einen PUR-Katalysator,
   c) gegebenenfalls aus der Polyurethanchemie bekannte Hilfs- und Zusatzstoffe,
   d) 0,1 bis 5 Gew.-% mindestens einen Katalysator ausgewählt aus quarternären Ammoniumsalzen und/oder quarternären Phosphoniumsalzen mit Halogenen, Hydroxiden, Alkoholaten oder organischen oder anorganischen Säureanionen als Gegenion,
      und
   e) 0,1 bis 5 Gew.-% mindestens einen Co-Katalysator, ausgewählt aus
      e1) mindestens einem Epoxid
         und/oder
      e2) mindestens einem Metallacetylacetonat und/oder quarternären Ammoniumacetylacetonat und/oder quarternären Phosphoniumacetylacetonat.

Diese erfindungsgemäß eingesetzten hochreaktiven Polyurethanzusammensetzungen werden bei Temperaturen von bevorzugt 100 bis 160 °C ausgehärtet und als Variante II bezeichnet.

Die speziellen Katalysatoren unter d) und e) gewährleisten eine Aushärtung der Uretdiongruppen haltigen Polyurethanzusammensetzungen bei niedrigen Temperaturen. Die Uretdiongruppen haltigen Polyurethanzusammensetzungen sind somit hochreaktiv.

Als Uretdiongruppen haltigen Polyadditionsverbindungen a) werden solche wie oben beschrieben eingesetzt.

Die Komponenten b und c) werden wie oben beschrieben eingesetzt.

Als Katalysatoren unter d) werden quarternäre Ammoniumsalze, bevorzugt Tetralkylammoniumsalze und/oder quarternäre Phosphoniumsalze mit Halogenen, Hydroxiden, Alkoholaten oder organischen oder anorganischen Säureanionen als Gegenion, eingesetzt. Beispiele dafür sind:
Tetramethylammoniumformiat, Tetramethylammoniumacetat, Tetramethylammoniumpropionat, Tetramethylammoniumbutyrat, Tetramethylammonium-benzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und Tetrabutylammoniumbenzoat und Tetrabutylphosphoniumacetat, Tetrabutylphosphoniumformiat und Ethyltriphenylphosphoniumacetat, Tetrabutylphosphoniumbenzotriazolat, Tetraphenylphosphoniumphenolat und Trihexyltetradecylphosphoniumdecanoat, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Methyltributylammoniummethanolat, Methyltriethylammoniummethanolat, Tetramethylammoniummethanolat, Tetraethylammoniummethanolat, Tetrapropylammoniummethanolat, Tetrabutylammoniummethanolat, Tetrapentylammoniummethanolat, Tetrahexylammoniummethanolat, Tetraoctylammoniummethanolat, Tetradecylammoniummethanolat, Tetradecyltrihexylammoniummethanolat, Tetraoctadecylammoniummethanolat, Benzyltrimethylammoniummethanolat, Benzyltriethylammoniummethanolat, Trimethylphenylammoniummethanolat, Triethylmethylammoniummethanolat, Trimethylvinylammoniummethanolat, Methyltributylammoniumethanolat, Methyltriethylammoniumethanolat, Tetramethylammoniumethanolat, Tetraethylammoniumethanolat, Tetrapropylammoniumethanolat, Tetrabutylammoniumethanolat, Tetrapentylammoniumethanolat, Tetrahexylammoniumethanolat, Tetraoctylammoniummethanolat, Tetradecylammoniumethanolat, Tetradecyltrihexylammoniumethanolat, Tetraoctadecylammoniumethanolat, Benzyltrimethylammoniumethanolat, Benzyltriethylammoniumethanolat, Tri-methylphenylammoniumethanolat, Triethylmethylammoniumethanolat, Tri-methylvinylammoniumethanolat, Methyltributylammoniumbenzylat, Methyltriethylammoniumbenzylat, Tetramethylammoniumbenzylat, Tetraethylammoniumbenzylat, Tetrapropylammoniumbenzylat, Tetrabutylammoniumbenzylat, Tetrapentylammoniumbenzylat, Tetrahexylammoniumbenzylat, Tetraoctylammoniumbenzylat, Tetradecylammoniumbenzylat, Tetradecyltrihexylammoniumbenzylat, Tetraoctadecylammoniumbenzylat, Benzyltrimethylammoniumbenzylat, Benzyltriethylammoniumbenzylat, Tri-methylphenylammoniumbenzylat, Triethylmethylammoniumbenzylat, Tri-methylvinylammoniumbenzylat, Tetramethylammoniumfluorid, Tetraethylammoniumfluorid, Tetrabutylammoniumfluorid, Tetraoctylammoniumfluorid, Benzyltrimethylammoniumfluorid, Tetrabutylphosphoniumhydroxid, Tetrabutylphosphoniumfluorid, Tetrabutylammoniumchlorid, Tetrabutylammoniumbromid, Tetrabutylammoniumiodid, Tetraethylammoniumchlorid, Tetraethylammoniumbromid, Tetraethylammoniumiodid, Tetramethylammoniumchlorid, Tetramethylammoniumbromid, Tetramethylammoniumiodid, Benzyltrimethylammoniumchlorid, Benzyltriethylammoniumchlorid, Benzyltripropylammoniumchlorid, Benzyltributylammoniumchlorid, Methyltributylammoniumchlorid, Methyltripropylammoniumchlorid, Methyltriethylammoniumchlorid, Methyltriphenylammoniumchlorid, Phenyltrimethylammoniumchlorid, Benzyltrimethylammoniumbromid, Benzyltriethylammoniumbromid, Benzyltripropylammoniumbromid, Benzyltributylammoniumbromid, Methyltributylammoniumbromid, Methyltripropylammoniumbromid, Methyltriethylammoniumbromid, Methyltriphenylammoniumbromid, Phenyltrimethylammoniumbromid, Benzyltrimethylammoniumiodid, Benzyltriethylammoniumiodid, Benzyltripropylammoniumiodid, Benzyltributylammoniumiodid, Methyltributylammoniumiodid, Methyltripropylammoniumiodid, Methyltriethylammoniumiodid, Methyltriphenylammoniumiodid und Phenyltrimethylammoniumiodid, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Tetramethylammoniumfluorid, Tetraethylammoniumfluorid, Tetrabutylammoniumfluorid, Tetraoctylammoniumfluorid und Benzyltrimethylammoniumfluorid. Diese Katalysatoren können allein oder in beliebigen Mischungen zugesetzt werden. Bevorzugt werden Tetraethylammoniumbenzoat und/oder Tetrabutylammoniumhydroxid verwendet.

Der Anteil an Katalysatoren d) kann 0,1 bis 5 Gew.-% betragen, bevorzugt von 0,3 bis 2 Gew.-%, bezogen auf die Gesamtformulierung der Polyurethanzusammensetzung.

Eine erfindungsgemäße Variante schließt die Anbindung solcher Katalysatoren d) an die funktionellen Gruppen der Polyadditionsverbingungen a) mit ein. Außerdem können diese Katalysatoren mit einer inerten Hülle umgeben und damit verkapselt sein.

Als Co-Katalysatoren e1) werden Epoxide eingesetzt. In Frage kommen dabei z. B. Glycidylether, Glycidylester, aliphatische Epoxide, Diglycidylether auf Basis Bisphenol A und/oder Glycidylmethacrylate. Beispiele für solche Epoxide sind Triglycidylisocyanurat (TGIC, Handelsname Araldit 810, Huntsman), Gemische aus Terephthalsäurediglycidylester und Trimelitsäuretriglycidylester (Handelsname Araldit PT 910 und 912, Huntsman), Glycidylester der Versaticsäure (Handelsname Kardura E10, Shell), 3,4-Epoxycyclohexylmethyl-3',4'-epoxycyclohexancarboxylat (ECC), Diglycidylether auf Basis Bisphenol A (Handelsname EPIKOTE 828, Shell) Ethylhexylglycidylether, Butylglycidylether, Pentaerythrittetraglycidylether, (Handelsname Polypox R 16, UPPC AG) sowie andere Polypoxtypen mit freien Epoxygruppen. Es können auch Mischungen eingesetzt werden. Bevorzugt werden verwendet Gemische aus Terephthalsäurediglycidylester und Trimelitsäuretriglycidylester (ARALDIT PT 910 und/oder 912) eingesetzt.

Als Co-Katalysatoren d2) kommen Metallacetylacetonate in Frage. Beispiele dafür sind Zinkacetylacetonat, Lithiumacetylacetonat und Zinnacetylacetonat, allein oder in Mischungen. Bevorzugt wird Zinkacetylacetonat eingesetzt.

Als Co-Katalysatoren d2) kommen ausserdem quarternäre Ammoniumacetylacetonate oder quarternäre Phosphoniumacetylacetonate in Frage.

Beispiele für solche Katalysatoren sind Tetramethylammoniumacetylacetonat, Tetraethylammoniumacetylacetonat, Tetrapropylammoniumacetylacetonat, Tetrabutylammoniumacetylacetonat, Benzyltrimethylammoniumacetylacetonat, Benzyltriethylammoniumacetylacetonat, Tetramethylphosphoniumacetylacetonat, Tetraethylphosphoniumacetylacetonat, Tetrapropylphosphoniumacetylacetonat, Tetrabutylphosphoniumacetylacetonat, Benzyltrimethylphosphoniumacetylacetonat, Benzyltriethylphosphoniumacetylacetonat. Besonders bevorzugt werden Tetraethylammoniumacetylacetonat und/oder Tetrabutylammoniumacetylacetonat eingesetzt. Selbstverständlich können auch Mischungen solcher Katalysatoren verwendet werden.

Der Anteil an Co-Katalysatoren e1) und/oder e2) kann von 0,1 bis 5 Gew.-% betragen, bevorzugt von 0,3 bis 2 Gew.-%, bezogen auf die Gesamtformulierung des Matrixmaterials.

Hochreaktiv (Variante II) bedeutet im Rahmen dieser Erfindung, dass die erfindungsgemäß eingesetzten Uretdiongruppen haltigen Polyurethanzusammensetzungen B) bei Temperaturen von 100 bis 220 °C, und zwar je nach Art des Trägers aushärten. Bevorzugt beträgt diese Aushärtungstemperatur 120 bis 180 °C, besonders bevorzugt von 130 bis 140 °C. Die Zeit zur Aushärtung der erfindungsgemäß eingesetzten Polyurethanzusammensetzung liegt in der Regel innerhalb von 1 bis 60 Minuten. Mit Hilfe der erfindungsgemäß eingesetzten hochreaktiven und somit bei Niedrigtemperatur härtenden 1K-Polyurethanzusammensetzungen B) kann bei 100 bis 160 °C Aushärtungstemperatur nicht nur Energie und Aushärtungszeit gespart werden, sondern es lassen sich auch viele Temperatur sensible Träger verwenden.

Die erfindungsgemäß eingesetzten reaktiven oder hochreaktiven Polyurethanzusammensetzungen bieten einen sehr guten Verlauf und damit eine gute Imprägnierfähigkeit und im ausgehärteten Zustand eine ausgezeichnete Chemikalienbeständigkeit. Bei Verwendung von aliphatischen Vernetzern (z. B. IPDI oder H₁₂MDI) wird zusätzlich noch eine gute Witterungsbeständigkeit erreicht.

Die erfindungsgemäß hergestellten Prepregs als auch die Composite-Bauteile weisen einen Faservolumenanteil von größer 10 %, bevorzugt von 50 - 70 %, besonders bevorzugt von 50 bis 65 % auf.

Die 1K-Polyurethanzusammensetzungen B) kann flüssig, hoch viskos oder fest sein. In der Regel weist die 1K-Polyurethanzusammensetzung einen Tg oder Schmelzpunkt von mindestens 30 °C maximal aber 39 °C auf.

Die erfindungsgemäß verwendeten reaktiven oder hochreaktiven Polyurethanzusammensetzungen reagiert in der Regel erst oberhalb von 160 °C, bei den reaktiven Polyurethanzusammensetzungen, oder oberhalb von 100 °C bei den hochreaktiven Polyurethanzusammensetzungen zu einem vernetzten Polyurethan und bildet somit die Matrix des Composites. Das bedeutet, dass die erfindungsgemäßen Prepregs nach ihrer Herstellung aus dem Träger und der applizierten reaktiven Polyurethanzusammensetzung, welche in unvernetzter, aber in reaktiver Form vorliegt, aufgebaut sind.

Die Prepregs sind also lagerstabil, in der Regel mehrere Tage und sogar Wochen und Monate und können somit jederzeit zu Compositen weiterverarbeitet werden. Dies ist der wesentliche Unterschied zu den bereits oben beschriebenen 2-Komponenten-Systemen, die reaktiv und nicht lagerstabil sind, da diese nach dem Aufbringen sofort beginnen zu Polyurethanen zu reagieren und vernetzen.

Gegenstand der Erfindung ist auch ein Verfahren zur Herstellung von Prepregs im Wesentlichen aufgebaut aus
A) mindestens einem Faser förmigen Träger und
B) mindestens einer 1K-Polyurethanzusammensetzung mit Tg < 40°C, ermittelt gemäß DIN EN ISO 11357-1;
   I. durch Herstellung der 1K-Polyurethanzusammensetzung B), und
   II. Imprägnierung des Faser förmigen Träger A) mit der 1K-Polyurethanzusammensetzung B), welche optional gelöst in Lösemittel ist,
   III. und gegebenenfalls Entfernen des Lösemittels.

Das Prinzip des Verfahrens zur Herstellung von Prepregs besteht darin, dass zunächst eine reaktive Polyurethanzusammensetzung B) aus deren einzelnen Komponenten, optional in einem geeigneten gemeinsamen Lösemittel, hergestellt wird. Diese Kombination aus der reaktiven Polyurethanzusammensetzung B) und optional Lösemittel wird dann auf den Faser förmigen Träger A) aufgebracht, bevorzugt direkt nach der Herstellung der reaktiven Polyurethanzusammensetzung B), wobei der Faser förmige Träger getränkt / imprägniert wird. Anschließend wird das optionale Lösemittel gegebenenfalls entfernt. Bevorzugt wird das Lösemittel vollständig bei niedriger Temperatur, bevorzugt < 160 °C, besonders bevorzugt < 100 °C durch z. B. thermische Behandlung oder Vakuumapplizierung entfernt.

Danach können die lagerfähigen Prepregs zu einem späteren Zeitpunkt zu Composites weiterverarbeitet werden. Durch das erfindungsgemäße Verfahren erfolgt eine sehr gute Imprägnierung des Faser förmigen Trägers.

Die Herstellung der Polyurethanzusammensetzung B) zur Herstellung der Prepregs kann in geeigneten Aggregaten, wie z.B. beheizbaren Rührkesseln, Knetern, oder auch Extrudern, erfolgen, wobei Temperaturobergrenzen von 100 °C nicht überschritten werden sollten.

Als geeignete Lösemittel für das erfindungsgemäße Verfahren können alle aprotischen Flüssigkeiten verwendet werden, die nicht reaktiv gegenüber den reaktiven Polyurethanzusammensetzungen sind, ein ausreichendes Lösevermögen gegenüber den eingesetzten einzelnen Komponenten der reaktiven Polyurethanzusammensetzung aufweisen und im Rahmen des Prozessschrittes der Lösemittelentfernung bis auf geringfügige Spuren (< 1 Gewichts-%) aus dem mit der reaktiven Polyurethanzusammensetzung imprägnierten Prepreg abgezogen werden können, wobei eine Recyclierung des abgetrennten Lösemittels vorteilhaft ist. Beispielhaft seien hier genannt: Ketone (Aceton, Methylethylketon, Methylisobutylketon, Cyclohexanon), Ether (Tetrahydrofuran), Ester (n-Propylacetat, n-Butylacetat, Isobutylacetat, 1,2-Propylencarbonat, Propylenglykol-Methylether-Acetat).

Die Herstellung der Prepregs nach diesem Imprägnierverfahren, optional mit Lösemitteln, kann erfindungsgemäß im Prinzip nach beliebigen Methoden und mittels der bekannten Anlagen und Apparaturen erfolgen.

Die Lösungsimprägnierung wird unter anderem für die Herstellung von Epoxycomposites eingesetzt
["Composites Technologien, Paolo Ermanni (Version 4), Script zur Vorlesung ETH Zürich, August 2007, Kapitel 4.2.2"]. Reaktive Polyurethanzusammensetzungen in Lösung werden dort aber nicht genannt.

Alternativ kann die Imprägnierung der Faser auch ohne Lösemittel im Direkt-Schmelzverfahren erfolgen.

Gegenstand der Erfindung ist ein Direkt-Schmelze-Imprägnierverfahren zur Herstellung von Prepregs,
im Wesentlichen aufgebaut aus
A) mindestens einem Faser förmigen Träger und
B) mindestens einer 1K- Polyurethanzusammensetzung mit Tg < 40 °C, ermittelt gemäß DIN EN ISO 11357-1, als Matrixmaterial,
   I. durch Herstellung der 1K-Polyurethanzusammensetzung B) in der Schmelze, und
   II. direkte Imprägnierung des Faser förmigen Trägers A) mit der Schmelze aus B).

Das Prinzip des Direkt-Schmelze-Impregnierverfahren der Prepregs besteht darin, dass zunächst eine reaktive Polyurethanzusammensetzung B) aus deren einzelnen Komponenten hergestellt wird. Diese Schmelze der reaktiven Polyurethanzusammensetzung B) wird dann direkt auf den Faser förmigen Träger A) aufgebracht, das heißt es erfolgt eine Imprägnierung des Faser förmigen Trägers A) mit der Schmelze aus B). Danach können die abgekühlten lagerfähigen Prepregs zu einem späteren Zeitpunkt zu Composites weiterverarbeitet werden. Durch dass erfindungsgemäße Direkt-Schmelze-Impregnierverfahren erfolgt eine sehr gute Imprägnierung des Faser förmigen Trägers, dadurch bedingt, dass die dabei flüssig niedrig viskosen reaktiven Polyurethanzusammensetzungen die Faser des Trägers sehr gut benetzen, wobei die zu einer beginnenden Vernetzungsreaktion führen könnende thermische Belastung der Polyurethanzusammensetzung durch eine vorherige Schmelzehomogenisierung vermieden wird, des weiteren fallen die Prozessschritte der Vermahlung und Siebung in einzelne Partikelgrößenfraktionen weg, sodass eine höhere Ausbeute an imprägniertem Faser förmigen Träger erzielt wird.

Die Prepregs können je nach Bedarf zu unterschiedlichen Formen kombiniert und zugeschnitten werden.

Zur Konsolidierung der Prepregs zu einem einzigen Composite und zur Vernetzung des Matrixmaterials zur Matrix werden die Prepregs zugeschnitten, gegebenenfalls vernäht oder anderweitig fixiert und in einer geeigneten Form unter Druck und gegebenenfalls Anlegen von Vakuum verpresst. Im Rahmen dieser Erfindung erfolgt dieser Vorgang der Herstellung der Composites aus den Prepregs je nach Aushärtungszeit bei Temperaturen von oberhalb etwa 160 °C bei Einsatz von reaktiven Matrixmaterialien (Variante I), oder bei mit entsprechenden Katalysatoren versehenen hochreaktiven Matrixmaterialien (Variante II) bei Temperaturen von über 100 °C.

Gegenstand der Erfindung ist auch die Verwendung der Prepregs insbesondere mit Faser förmigen Trägern aus Glas-, Kohle- oder Aramid-Fasern.

Gegenstand der Erfindung ist auch die Verwendung der erfindungsgemäßen Prepregs, zur Herstellung von Composites im Boots- und Schiffbau, in der Luft- und Raumfahrtechnik, im Automobilbau, für Zweiräder, bevorzugt Motorräder und Fahrräder, in den Bereichen Automotive, Transportation, Construction, Medizintechnik, Sport, Elektro- und Elektronik-Industrie, Energieerzeugungsanlagen, z. B. für Rotorblätter bei Windkraftanlagen.

Gegenstand der Erfindung sind auch die nach dem erfindungsgemäßen Verfahren hergestellten Prepregs.

Gegenstand der Erfindung sind auch die aus den erfindungsgemäßen Prepregs hergestellten Composite-Bauteile.

Nachfolgend wird die Erfindung durch Beispiele erläutert.

### Beispiele

Folgende Glasfasergelege/-gewebe wurden in den Beispielen verwendet, Glasfilamentgewebe 296 g/m² - Atlas, Finish FK 144 (Interglas 92626)
A) Herstellung des konventionellen Härters und der reaktiven Polyurethanzusammensetzung (zweistufig, nicht erfindungsgemäß):
   119,1 g IPDI-Uretdion (Evonik Industries, NCO-Zahl (gesamt: frei + latent) = 37,8) wurden in 100 ml Butylacetat gelöst und mit 27,5 g Methylpentandiol und 3,5 g Trimethylolpropan versetzt. Nach Zugabe von 0,01 g Dibutylzinndilaurat wurde 4 h unter Rühren auf 80 °C geheizt (NCO gesamt/OH = 1,96:1). Danach waren titrimetrisch keine freien NCO-Gruppen mehr zu detektieren. Der Härter besitzt einen effektiven NCO-Latentgehalt von 12,8 Gew.-% (bezogen auf Feststoff). Zu diesem Härter wird in der zweiten Stufe 42 g einer Harzkomponente gegeben (Polyol 4640, OH-Zahl: 630, Perstorp). Nach Entfernen des Lösemittels am Rotationsverdampfer wird ein TG dieser Mischung von 45 °C bestimmt.
B) Herstellung der hochreaktiven Zusammensetzung (einstufig, erfindungsgemäß):
   119,1 g IPDI-Uretdion (Evonik Industries) wurden in 100 ml Butylacetat gelöst und mit 27,5 g Methylpentandiol, 3,5 g Trimethylolpropan und 42 g Polyol 4640 (Perstorp, OH-Zahl 630 mg KOH/g) versetzt. Nach Zugabe von 0,01 g Dibutylzinndilaurat wurde 4 h unter Rühren auf 80 °C geheizt (NCO gesamt/OH =1,05:1). Danach waren titrimetrisch keine freien NCO-Gruppen mehr zu detektieren. Diese Zusammensetzung besitzt einen effektiven NCO-Latentgehalt von 11,0 Gew.-% (bezogen auf Feststoff). Nach Entfernen des Lösemittels am Rotationsverdampfer wird ein TG dieser Mischung von 38 °C bestimmt.

Es wurden Polyurethanzusammensetzungen mit den folgenden Rezepturen zur Herstellung der Prepregs und der Composite verwendet.

**Tabelle 1**

| | Beispiel 1 * | Beispiel 2 | Beispiel 3 * | Beispiel 4 |
|---|---|---|---|---|
| Zweistufige Mischung (A) | 76,0 Gew.-% | | 68,6 Gew.-% | |
| Einstufige Mischung (B) | | 76,0 Gew.-% | | 68,6 Gew.-% |
| Butylacetat (Lösungsmittel) | 23,8 Gew.-% | 23,8 Gew.-% | 29,0 Gew.-% | 29,0 Gew.-% |
| Benzoin (Entgasungsmittel, Aldrich) | 0,2 Gew.-% | 0,2 Gew.-% | 0,2 Gew.-% | 0,2 Gew.-% |
| Tetraethylammoniumbenzoat (Katalysator, Evonik Industries) | | | 0,5 Gew.-% | 0,5 Gew.-% |
| Araldit PT 912 (Epoxid, Huntsman) | | | 1,5 Gew.-% | 1,5 Gew.-% |
| Oxalsäure (Säure, Aldrich) | | | 0,2 Gew.-% | 0,2 Gew.-% |
| Summe | 100 Gew.-% | 100 Gew.-% | 100 Gew.-% | 100 Gew.-% |
| Schmelzviskosität nach Abtrennung des Lösemittels bei 140 °C | 17 Pas | 12 Pas | 12 Pas | 7 Pas |

| | | | | |
|---|---|---|---|---|
| * Nicht erfindungsgemäße Vergleichsversuche nach DE102011006163 | | | | |

Deutlich zu erkennen ist die geringere Schmelzviskosität der erfinderischen Zusammensetzung und damit eine einfachere und schnellere Imprägnierung der Fasern.

Die Einsatzstoffe aus der Tabelle wurden in einem Vormischer innig vermischt und anschließend im angegebenen Lösemittel gelöst.

Zur Herstellung des Prepregs wurde das Glasfasergewebe mit der Lösung der Matrixmaterialien getränkt. Die Prepregs wurden im Ofen bei Temperaturen von 50 bis 70 °C, unter Anlegen von Vakuum bis zur Gewichtskonstanz getrocknet.

Alle Prepregs führten nach der Lösemittelentfernung zu einer geschlossenen Oberfläche ohne Blasenbildung. Die Prepregs ließ sich gut weiterverarbeiten.

### DSC-Messungen

Die DSC-Untersuchungen (Glasübergangstemperatur-Bestimmungen) werden mit einem Mettler Toledo DSC 821e nach

DIN 53765 durchgeführt.

Die DSC Untersuchungen der Prepregs aus den Beispielen 1-4 ergeben folgende Ergebnisse:

**Tab. 2: DSC-Untersuchungen**

| | Bsp.1 | Bsp.2 | Bsp.3 | Bsp. 4 |
|---|---|---|---|---|
| Tg (2. Aufheizen) in °C | 97 | 116 | 121 | 124 |

Die Glastemperaturen, die beim zweiten Aufheizen gemessen werden, sind die Glastemperaturen des abreagierten/vernetzten Matrixmaterials.

### Composite-Bauteil-Herstellung

Die Composite-Bauteile wurden über eine dem Fachmann bekannte Presstechnik auf einer Composite-Presse hergestellt. Die mittels Direktimprägnierung hergestellten, homogenen Prepregs wurden an einer Tischpresse zu Verbundwerkstoffen verpresst. Bei dieser Tischpresse handelt es sich um die Polystat 200 T der Firma Schwabenthan, mit der die Prepregs bei Temperaturen zwischen 120 und 200 °C zu den entsprechenden Composite-Platten verpresst wurden. Der Druck wurde zwischen Normaldruck und 450 bar variiert.

In den Beispielen 1 und 2 wurde die Temperatur der Presse auf 150 °C eingestellt und im Verlauf der Verpressung auf 180 °C erhöht, der Druck wurde nach einer kurzen Aufschmelzphase von 3 Minuten auf 5 bar erhöht und bis zur Entnahme des Composite-Bauteils aus der Presse nach bis zu 30 Minuten gehalten. Die harten, steifen, chemikalienbeständigen und schlagzähen Composite-Bauteile (Plattenware) wurden hinsichtlich des Aushärtungsgrades (Bestimmung über DSC) untersucht. Bei der verwendeten Polyurethan-Zusammensetzung ist nach ca. 20 Minuten die Vernetzung vollständig, wobei dann auch keine Reaktionsenthalpie für die Vernetzungsreaktion mehr detektierbar ist.

In den Beispielen 3 und 4 (katalysierte Variante) wurde die Temperatur der Presse auf 150 °C eingestellt und im Verlauf der Verpressung auf 180 °C erhöht, der Druck wurde nach einer kurzen Aufschmelzphase von 3 Minuten auf 5 bar erhöht und bis zur Entnahme des Composite-Bauteils aus der Presse nach bis zu 10 Minuten gehalten. Die harten, steifen, chemikalienbeständigen und schlagzähen Composite-Bauteile (Plattenware) wurden hinsichtlich des Aushärtungsgrades (Bestimmung über DSC) untersucht. Bei der verwendeten Polyurethan-Zusammensetzung ist nach ca. 20 Minuten die Vernetzung vollständig, wobei dann auch keine Reaktionsenthalpie für die Vernetzungsreaktion mehr detektierbar ist.

Die erfinderischen Zusammensetzungen weisen eine niedrigere Schmelzviskosität auf und sind zudem mindestens genauso gut geeignet für die Herstellung von Compositen wie die herkömmlichen Formulierungen. Die Tgs und damit die Wärmeformbeständigkeit sind mindestens gleichgut, tendenziell etwas höher. Aufgrund der einstufig hergestellten Zusammensetzungen entfallen zusätzlich Mischungsschritte, bzw. wird die Fehleranfälligkeit für eine falsche Stöchiometrie verringert.

## Patentansprüche

1. Prepregs
im Wesentlichen aufgebaut aus
A) mindestens einem Faser förmigen Träger
und
B) mindestens einer 1K-Polyurethanzusammensetzung,
wobei die Polyurethanzusammensetzung mit einem Tg von kleiner 40 °C, ermittelt gemäß DIN EN ISO 11357-1, im Wesentlichen intern blockierte und/oder mit Blockierungsmitteln blockierte Di- und/oder Polyisocyanate und/oder deren Polyadditionsverbindungen enthält.

2. Prepregs nach mindestens einem der vorherigen Ansprüche,
**dadurch gekennzeichnet,**
**dass** Faser förmiges Material aus Glas, Kohlenstoff, Kunststoffen, wie Polyamid (Aramid) oder Polyester, Naturfasern, oder mineralischen Fasermaterialien wie Basaltfasern oder keramische Fasern, enthalten ist.

3. Prepregs nach mindestens einem der vorherigen Ansprüche,
**dadurch gekennzeichnet,**
**dass** als Faser förmiger Träger textile Flächengebilde aus Vlies, Maschenware, Gewirke und Gestricke, nicht maschige Gebinde wie Gewebe, Gelege oder Geflechte, als Langfaser- und Kurzfasermaterialien, enthalten sind.

4. Prepregs nach mindestens einem der vorherigen Ansprüche,
**dadurch gekennzeichnet,**
**dass** Di- oder Polyisocyanate, ausgewählt aus Isophorondiisocyanat (IPDI), Hexamethylendiisocyanat (HDI), 4,4'-Diisocyanatodicyclohexylmethan, 2,4'-Diisocyanatodicyclohexylmethan, 2,2'-Diisocyanatodicyclohexylmethan allein oder in Mischungen der Isomeren (H₁₂MDI), 2-Methylpentandiisocyanat (MPDI), 2,2,4-Trimethylhexamethylendiisocyanat, 2,4,4-Trimethylhexamethylendiisocyanat sowie deren Gemische, (TMDI), Norbornandiisocyanat (NBDI), allein oder in Mischungen, eingesetzt werden.

5. Prepregs nach mindestens einem der vorherigen Ansprüche,
**dadurch gekennzeichnet,**
**dass** externe Blockierungsmittel, ausgewählt aus Acetessigsäureethylester, Diisopropylamin, Methylethylketoxim, Malonsäurediethylester, ε-Caprotactam, 1,2,4-Triazol, Phenol oder substituierte Phenole und/oder 3,5-Dimethylpyrazol, eingesetzt werden.

6. Prepregs nach mindestens einem der vorherigen Ansprüche,
**dadurch gekennzeichnet,**
**dass** die 1K-Polyurethanzusammensetzungen B) zusätzliche Katalysatoren enthalten, bevorzugt Dibutylzinndilaurat, Zinkoctoat, Bismuthneodecanoat, und/oder tertiäre Amine, bevorzugt 1,4-Diazabicylco[2.2.2.]octan, in Mengen von 0,001 - 1 Gew.-%.

7. Prepregs, nach mindestens einem der Ansprüche 1 bis 3, enthaltend mindestens eine Uretdiongruppen haltige 1K-Polyurethanzusammensetzung B) mit einem Tg < 40 °C, ermittelt gemäß DIN EN ISO 11357-1, im Wesentlichen enthaltend
a) mindestens einen Uretdiongruppen haltige Polyadditionsverbindungen, basierend auf der Polyadditionsreaktion aus aliphatischen, (cyclo)aliphatischen oder cycloaliphatischen Uretdiongruppen enthaltende Polyisocyanaten und hydroxylgruppenhaltigen Verbindungen, wobei die Polyadditionsverbindung einen freien NCO-Gehalt von kleiner 5 Gew.-% und einem Uretdiongehalt von 3-25 Gew.-% aufweist,
b) gegebenenfalls mindestens einen Katalysator,
c) gegebenenfalls aus der Polyurethanchemie bekannte Hilfs- und Zusatzstoffe.

8. Prepregs nach Anspruch 7,
**dadurch gekennzeichnet,**
**dass** Di- oder Polyisocyanate, ausgewählt aus Isophorondiisocyanat (IPDI), Hexamethylendiisocyanat (HDI), 4,4'-Diisocyanatodicyclohexylmethan, 2,4'-Diisocyanatodicyclohexylmethan, 2,2'-Diisocyanatodicyclohexylmethan allein oder in Mischungen der Isomeren (H₁₂MDI), 2-Methylpentandiisocyanat (MPDI), 2,2,4-Trimethylhexamethylendiisocyanat, 2,4,4-Trimethylhexamethylendiisocyanat sowie deren Gemische, (TMDI), Norbornandiisocyanat (NBDI), allein oder in Mischungen, zur Herstellung der Uredione eingesetzt werden.

9. Prepregs nach Anspruch 8,
**dadurch gekennzeichnet,**
**dass** Di- oder Polyisocyanate, ausgewählt aus IPDI, HDI, TMDI und H₁₂MDI eingesetzt, allein oder in Mischungen. In einer besonders bevorzugten Ausführungsform werden IPDI und/oder 4,4'-H12MDI und/oder HDI und/oder ein Gemisch von 2,2,4-TMDI und 2,4,4-TMDI, allein oder in Mischungen, zur Herstellung der Uredione eingesetzt werden.

10. Prepregs, nach mindestens einem der Ansprüche 7 bis 9, enthaltend
B) mindestens einer Uretdiongruppen haltigen 1K-Polyurethanzusammensetzung mit Tg < 40 °C, ermittelt gemäß DIN EN ISO 11357-1, im Wesentlichen enthaltend
a) mindestens einen Uretdiongruppen haltige Polyadditionsverbindung
und
b) gegebenenfalls mindestens einen PUR-Katalysator,
c) gegebenenfalls aus der Polyurethanchemie bekannte Hilfs- und Zusatzstoffe,
d) 0,1 bis 5 Gew.-% mindestens einen Katalysator ausgewählt aus quarternären Ammoniumsalzen und/oder quarternären Phosphoniumsalzen mit Halogenen, Hydroxiden, Alkoholaten oder organischen oder anorganischen Säureanionen als Gegenion,
und
e) 0,1 bis 5 Gew.-% mindestens einen Co-Katalysator, ausgewählt aus
e1) mindestens einem Epoxid
und/oder
e2) mindestens einem Metallacetylacetonat und/oder quarternären Ammoniumacetylacetonat und/oder quarternären Phosphoniumacetylacetonat.

11. Prepregs, nach mindestens einem der Ansprüche 7 bis 10, enthaltend
B) mindestens einer Uretdiongruppen haltigen 1K-Polyurethanzusammensetzung mit Tg < 40 °C, ermittelt gemäß DIN EN ISO 11357-1, im Wesentlichen enthaltend
a) mindestens einen Uretdiongruppen haltige Polyaddtionsverbindung basierend auf Polyadditionsverbindungen aus aliphatischen, (cyclo)aliphatischen oder cycloaliphatischen Uretdiongruppen enthaltenen Polyisocyanaten und hydroxylgruppenhaltigen Verbindungen, wobei die Polyadditionsverbindung einen freien NCO-Gehalt von kleiner 5 Gew.-% und einem Uretdiongehalt von 3 - 25 Gew.-% aufweist,
und
b) gegebenenfalls mindestens einen PUR-Katalysator,
c) gegebenenfalls aus der Polyurethanchemie bekannte Hilfs- und Zusatzstoffe,
d) 0,1 bis 5 Gew.-% mindestens einen Katalysator ausgewählt aus quarternären Ammoniumsalzen und/oder quarternären Phosphoniumsalzen mit Halogenen, Hydroxiden, Alkoholaten oder organischen oder anorganischen Säureanionen als Gegenion,
und
e) 0,1 bis 5 Gew.-% mindestens einen Co-Katalysator, ausgewählt aus
e1) mindestens einem Epoxid
und/oder
e2) mindestens einem Metallacetylacetonat und/oder quarternären Ammoniumacetylacetonat und/oder quarternären Phosphoniumacetylacetonat.

12. Prepregs nach mindestens einem der vorherigen Ansprüche 7 bis 11,
**dadurch gekennzeichnet,**
**dass** als Katalysatoren unter d) Tetramethylammoniumformiat, Tetramethylammoniumacetat, Tetramethylammoniumpropionat, Tetramethylammoniumbutyrat, Tetramethylammonium-benzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und Tetrabutylammoniumbenzoat und Tetrabutylphosphoniumacetat, Tetrabutylphosphoniumformiat und Ethyltriphenylphosphoniumacetat, Tetrabutylphosphoniumbenzotriazolat, Tetraphenylphosphoniumphenolat und Trihexyltetradecylphosphoniumdecanoat, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Tri-methylphenylammoniumhydroxid, Triethylmethylammoniumhydroxid, Tri-methylvinylammoniumhydroxid, Methyltributylammoniummethanolat, Methyltriethylammoniummethanolat, Tetramethylammoniummethanolat, Tetraethylammoniummethanolat, Tetrapropylammoniummethanolat, Tetrabutylammoniummethanolat, Tetrapentylammoniummethanolat, Tetrahexylammoniummethanolat, Tetraoctylammoniummethanolat, Tetradecylammoniummethanolat, Tetradecyltrihexylammoniummethanolat, Tetraoctadecylammoniummethanolat, Benzyltrimethylammoniummethanolat, Benzyltriethylammoniummethanolat, Trimethylphenylammoniummethanolat, Triethylmethylammoniummethanolat, Trimethylvinylammoniummethanolat, Methyltributylammoniumethanolat, Methyltriethylammoniumethanolat, Tetramethylammoniumethanolat, Tetraethylammoniumethanolat, Tetrapropylammoniumethanolat, Tetrabutylammoniumethanolat, Tetrapentylammoniumethanolat, Tetrahexylammoniumethanolat, Tetraoctylammoniummethanolat, Tetradecylammoniumethanolat, Tetradecyltrihexylammoniumethanolat, Tetraoctadecylammoniumethanolat, Benzyltrimethylammoniumethanolat, Benzyltriethylammoniumethanolat, Tri methylphenylammoniumethanolat, Triethylmethylammoniumethanolat, Tri methylvinylammoniumethanolat, Methyltributylammoniumbenzylat, Methyltriethylammoniumbenzylat, Tetramethylammoniumbenzylat, Tetraethylammoniumbenzylat, Tetrapropylammoniumbenzylat, Tetrabutylammoniumbenzylat, Tetrapentylammoniumbenzylat, Tetrahexylammoniumbenzylat, Tetraoctylammoniumbenzylat, Tetradecylammoniumbenzylat, Tetradecyltrihexylammoniumbenzylat, Tetraoctadecylammoniumbenzylat, Benzyltrimethylammoniumbenzylat, Benzyltriethylammoniumbenzylat, Tri-methylphenylammoniumbenzylat, Triethylmethylammoniumbenzylat, Tri-methylvinylammoniumbenzylat, Tetramethylammoniumfluorid, Tetraethylammoniumfluorid, Tetrabutylammoniumfluorid, Tetraoctylammoniumfluorid, Benzyltrimethylammoniumfluorid, Tetrabutylphosphoniumhydroxid, Tetrabutylphosphoniumfluorid, Tetrabutylammoniumchlorid, Tetrabutylammoniumbromid, Tetrabutylammoniumiodid, Tetraethylammoniumchlorid, Tetraethylammoniumbromid, Tetraethylammoniumiodid, Tetramethylammoniumchlorid, Tetramethylammoniumbromid, Tetramethylammoniumiodid, Benzyltrimethylammoniumchlorid, Benzyltriethylammoniumchlorid, Benzyltripropylammoniumchlorid, Benzyltributylammoniumchlorid, Methyltributylammoniumchlorid, Methyltripropylammoniumchlorid, Methyltriethylammoniumchlorid, Methyltriphenylammoniumchlorid, Phenyltrimethylammoniumchlorid, Benzyltrimethylammoniumbromid, Benzyltriethylammoniumbromid, Benzyltripropylammoniumbromid, Benzyltributylammoniumbromid, Methyltributylammoniumbromid, Methyltripropylammoniumbromid, Methyltriethylammoniumbromid, Methyltriphenylammoniumbromid, Phenyltrimethylammoniumbromid, Benzyltrimethylammoniumiodid, Benzyltriethylammoniumiodid, Benzyltripropylammoniumiodid, Benzyltributylammoniumiodid, Methyltributylammoniumiodid, Methyltripropylammoniumiodid, Methyltriethylammoniumiodid, Methyltriphenylammoniumiodid und Phenyltrimethylammoniumiodid, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Tetramethylammoniumfluorid, Tetraethylammoniumfluorid, Tetrabutylammoniumfluorid, Tetraoctylammoniumfluorid und Benzyltrimethylammoniumfluorid, allein oder in beliebigen Mischungen enthalten sind, bevorzugt Tetraethylammoniumbenzoat und/oder Tetrabutylammoniumhydroxid.

13. Prepregs nach mindestens einem der vorherigen Ansprüche 7 bis 12, **dadurch gekennzeichnet, dass** als Co-Katalysatoren e1) Glycidylether, Glycidylester, aliphatische Epoxide, Diglycidylether auf Basis Bisphenol A und Glycidylmethacrylate, allein oder in beliebigen Mischungen, enthalten sind.

14. Prepregs nach mindestens einem der vorherigen Ansprüche 7 bis 13 , **dadurch gekennzeichnet, dass** als Co-Katalysatoren e2) Zinkacetylacetonat, Lithiumacetylacetonat und Zinnacetylacetonat, allein oder in beliebigen Mischungen, bevorzugt Zinkacetylacetonat, enthalten sind.

15. Prepregs nach mindestens einem der vorherigen Ansprüche 7 bis 14, **dadurch gekennzeichnet, dass** als Co-Katalysatoren e2) Tetramethylammoniumacetylacetonat, Tetraethylammoniumacetylacetonat, Tetrapropylammoniumacetylacetonat, Tetrabutylammoniumacetylacetonat, Benzyltrimethylammoniumacetylacetonat, Benzyltriethylammoniumacetylacetonat, Tetramethylphosphoniumacetylacetonat, Tetraethylphosphoniumacetylacetonat, Tetrapropylphosphoniumacetylacetonat, Tetrabutylphosphoniumacetylacetonat, Benzyltrimethylphosphoniumacetylacetonat, Benzyltriethylphosphoniumacetylacetonat, allein oder in beliebigen Mischungen, bevorzugt Tetraethylammoniumacetylacetonat und/oder Tetrabutylammoniumacetylacetonat, enthalten sind.

16. Verfahren zur Herstellung von Prepregs nach mindestens einem der vorherigen Ansprüche im Wesentlichen aufgebaut aus
A) mindestens einem Faser förmigen Träger
und
B) mindestens einer 1K-Polyurethanzusammensetzung mit Tg < 40°C, ermittelt gemäß DIN EN ISO 11357-1,
I. durch Herstellung der 1K-Polyurethanzusammensetzung B),
und
II. Imprägnierung des Faser förmigen Träger A) mit der 1K-Polyurethanzusammensetzung B), welche optional gelöst in Lösemittel ist,
III. und gegebenenfalls Entfernen des Lösemittels.

17. Direkt-Schmelze-Imprägnierverfahren zur Herstellung von Prepregs nach mindestens einem der vorherigen Ansprüche,
im Wesentlichen aufgebaut aus
A) mindestens einem Faser förmigen Träger
und
B) mindestens einer 1K-Polyurethanzusammensetzung mit Tg < 40 °C, ermittelt gemäß DIN EN ISO 11357-1, als Matrixmaterial,
I. durch Herstellung der 1K-Polyurethanzusammensetzung B) in der Schmelze, und
II. direkte Imprägnierung des Faser förmigen Trägers A) mit der Schmelze aus B).

18. Verwendung der Prepregs nach mindestens einem der vorherigen Ansprüche, insbesondere mit Faser förmigen Trägern aus Glas-, Kohle- oder Aramid-Fasern.

19. Verwendung der Prepregs nach Anspruch 18,
zur Herstellung von Composites im Boots- und Schiffbau, in der Luft- und Raumfahrtechnik, im Automobilbau, für Zweiräder bevorzugt Motorräder und Fahrräder, in den Bereichen Automotive, Transportation, Construction, Medizintechnik, Sport, Elektro- und Elektronik-Industrie, Energieerzeugungsanlagen, wie für Rotorblätter bei Windkraftanlagen.

20. Composite-Bauteile, hergestellt aus Prepregs nach mindestens einem der Ansprüche 1 bis 19.

## Claims

1. Prepregs
formed essentially from
A) at least one fibrous carrier
and
B) at least one one-component polyurethane composition,
wherein the polyurethane composition having a Tg of less than 40°C, determined according to DIN EN ISO 11357-1, comprises essentially internally blocked and/or blocking agent-blocked di- and/or polyisocyanates and/or polyaddition compounds thereof.

2. Prepregs according to at least one of the preceding claims,
**characterized in that**
fibrous material composed of glass, carbon, plastics such as polyamide (aramid) or polyester, natural fibres, or mineral fibre materials such as basalt fibres or ceramic fibres is present.

3. Prepregs according to at least one of the preceding claims,
**characterized in that**
the fibrous carriers present are sheetlike textile structures made from nonwoven fabric, knitted fabric including loop-formed and loop-drawn knits, non-knitted fabrics such as weaves, laid scrims or braids, as long-fibre and short-fibre materials.

4. Prepregs according to at least one of the preceding claims,
**characterized in that**
di- or polyisocyanates selected from isophorone diisocyanate (IPDI), hexamethylene diisocyanate (HDI), 4,4'-diisocyanatodicyclohexylmethane, 2,4'-diisocyanatodicyclohexylmethane, 2,2'-diisocyanatodicyclohexylmethane, alone or in mixtures of the isomers (H₁₂MDI), 2-methylpentane diisocyanate (MPDI), 2,2,4-trimethylhexamethylene diisocyanate, 2,4,4-trimethylhexamethylene diisocyanate and mixtures thereof, (TMDI), norbornane diisocyanate (NBDI), alone or in mixtures, are used.

5. Prepregs according to at least one of the preceding claims,
**characterized in that**
external blocking agents selected from ethyl acetoacetate, diisopropylamine, methyl ethyl ketoxime, diethyl malonate, ε-caprolactam, 1,2,4-triazole, phenol or substituted phenols and/or 3,5-dimethylpyrazole are used.

6. Prepregs according to at least one of the preceding claims,
**characterized in that**
the one-component polyurethane compositions B) comprise additional catalysts, preferably dibutyltin dilaurate, zinc octoate, bismuth neodecanoate, and/or tertiary amines, preferably 1,4-diazabicyclo[2.2.2]octane, in amounts of 0.001%-1% by weight.

7. Prepregs according to at least one of Claims 1 to 3, comprising at least one one-component polyurethane composition B) containing uretdione groups and having a Tg of < 40°C, determined according to DIN EN ISO 11357-1, essentially comprising
a) at least one polyaddition compound containing uretdione groups, based on the polyaddition reaction of polyisocyanates containing aliphatic, (cyclo)aliphatic or cycloaliphatic uretdione groups and hydroxyl-containing compounds, where the polyaddition compound has a free NCO content of less than 5% by weight and a uretdione content of 3%-25% by weight,
b) optionally at least one catalyst,
c) optionally auxiliaries and additives known from polyurethane chemistry.

8. Prepregs according to Claim 7,
**characterized in that**
di- or polyisocyanates selected from isophorone diisocyanate (IPDI), hexamethylene diisocyanate (HDI), 4,4'-diisocyanatodicyclohexylmethane, 2,4'-diisocyanatodicyclohexylmethane, 2,2'-diisocyanatodicyclohexylmethane, alone or in mixtures of the isomers (H₁₂MDI), 2-methylpentane diisocyanate (MPDI), 2,2,4-trimethylhexamethylene diisocyanate, 2,4,4-trimethylhexamethylene diisocyanate and mixtures thereof, (TMDI), norbornane diisocyanate (NBDI), alone or in mixtures, are used for preparation of the uretdiones.

9. Prepregs according to Claim 8,
**characterized in that**
di- or polyisocyanates selected from IPDI, HDI, TMDI and H₁₂MDI used, alone or in mixtures. In a particularly preferred embodiment, IPDI and/or 4,4'-H12MDI and/or HDI and/or a mixture of 2,2,4-TMDI and 2,4,4-TMDI, alone or in mixtures, are used for preparation of the uretdiones.

10. Prepregs according to at least one of Claims 7 to 9, comprising
B) at least one one-component polyurethane composition containing uretdione groups and having Tg < 40°C, determined according to DIN EN ISO 11357-1, essentially comprising
a) at least one polyaddition compound containing uretdione groups
and
b) optionally at least one PUR catalyst,
c) optionally auxiliaries and additives known from polyurethane chemistry,
d) 0.1% to 5% by weight of at least one catalyst selected from quaternary ammonium salts and/or quaternary phosphonium salts with halogens, hydroxides, alkoxides or organic or inorganic acid anions as counterion,
and
e) 0.1% to 5% by weight of at least one cocatalyst selected from
e1) at least one epoxide
and/or
e2) at least one metal acetylacetonate and/or quaternary ammonium acetylacetonate and/or quaternary phosphonium acetylacetonate.

11. Prepregs according to at least one of Claims 7 to 10, comprising
B) at least one one-component polyurethane composition containing uretdione groups and having Tg < 40°C, determined according to DIN EN ISO 11357-1, essentially comprising
a) at least one polyaddition compound containing uretdione groups, based on polyaddition compounds of polyisocyanates containing aliphatic, (cyclo)aliphatic or cycloaliphatic uretdione groups and hydroxyl-containing compounds, where the polyaddition compound has a free NCO content of less than 5% by weight and a uretdione content of 3%-25% by weight,
and
b) optionally at least one PUR catalyst,
c) optionally auxiliaries and additives known from polyurethane chemistry,
d) 0.1% to 5% by weight of at least one catalyst selected from quaternary ammonium salts and/or quaternary phosphonium salts with halogens, hydroxides, alkoxides or organic or inorganic acid anions as counterion,
and
e) 0.1% to 5% by weight of at least one cocatalyst selected from
e1) at least one epoxide
and/or
e2) at least one metal acetylacetonate and/or quaternary ammonium acetylacetonate and/or quaternary phosphonium acetylacetonate.

12. Prepregs according to at least one of the preceding Claims 7 to 11,
**characterized in that**
catalysts present under d) are tetramethylammonium formate, tetramethylammonium acetate, tetramethylammonium propionate, tetramethylammonium butyrate, tetramethylammonium benzoate, tetraethylammonium formate, tetraethylammonium acetate, tetraethylammonium propionate, tetraethylammonium butyrate, tetraethylammonium benzoate, tetrapropylammonium formate, tetrapropylammonium acetate, tetrapropylammonium propionate, tetrapropylammonium butyrate, tetrapropylammonium benzoate, tetrabutylammonium formate, tetrabutylammonium acetate, tetrabutylammonium propionate, tetrabutylammonium butyrate and tetrabutylammonium benzoate, and tetrabutylphosphonium acetate, tetrabutylphosphonium formate and ethyltriphenylphosphonium acetate, tetrabutylphosphonium benzotriazolate, tetraphenylphosphonium phenolate and trihexyltetradecylphosphonium decanoate, methyltributylammonium hydroxide, methyltriethylammonium hydroxide, tetramethylammonium hydroxide, tetraethylammonium hydroxide, tetrapropylammonium hydroxide, tetrabutylammonium hydroxide, tetrapentylammonium hydroxide, tetrahexylammonium hydroxide, tetraoctylammonium hydroxide, tetradecylammonium hydroxide, tetradecyltrihexylammonium hydroxide, tetraoctadecylammonium hydroxide, benzyltrimethylammonium hydroxide, benzyltriethylammonium hydroxide, trimethylphenylammonium hydroxide, triethylmethylammonium hydroxide, trimethylvinylammonium hydroxide, methyltributylammonium methoxide, methyltriethylammonium methoxide, tetramethylammonium methoxide, tetraethylammonium methoxide, tetrapropylammonium methoxide, tetrabutylammonium methoxide, tetrapentylammonium methoxide, tetrahexylammonium methoxide, tetraoctylammonium methoxide, tetradecylammonium methoxide, tetradecyltrihexylammonium methoxide, tetraoctadecylammonium methoxide, benzyltrimethylammonium methoxide, benzyltriethylammonium methoxide, trimethylphenylammonium methoxide, triethylmethylammonium methoxide, trimethylvinylammonium methoxide, methyltributylammonium ethoxide, methyltriethylammonium ethoxide, tetramethylammonium ethoxide, tetraethylammonium ethoxide, tetrapropylammonium ethoxide, tetrabutylammonium ethoxide, tetrapentylammonium ethoxide, tetrahexylammonium ethoxide, tetraoctylammonium methoxide, tetradecylammonium ethoxide, tetradecyltrihexylammonium ethoxide, tetraoctadecylammonium ethoxide, benzyltrimethylammonium ethoxide, benzyltriethylammonium ethoxide, trimethylphenylammonium ethoxide, triethylmethylammonium ethoxide, trimethylvinylammonium ethoxide, methyltributylammonium benzylate, methyltriethylammonium benzylate, tetramethylammonium benzylate, tetraethylammonium benzylate, tetrapropylammonium benzylate, tetrabutylammonium benzylate, tetrapentylammonium benzylate, tetrahexylammonium benzylate, tetraoctylammonium benzylate, tetradecylammonium benzylate, tetradecyltrihexylammonium benzylate, tetraoctadecylammonium benzylate, benzyltrimethylammonium benzylate, benzyltriethylammonium benzylate, trimethylphenylammonium benzylate, triethylmethylammonium benzylate, trimethylvinylammonium benzylate, tetramethylammonium fluoride, tetraethylammonium fluoride, tetrabutylammonium fluoride, tetraoctylammonium fluoride, benzyltrimethylammonium fluoride, tetrabutylphosphonium hydroxide, tetrabutylphosphonium fluoride, tetrabutylammonium chloride, tetrabutylammonium bromide, tetrabutylammonium iodide, tetraethylammonium chloride, tetraethylammonium bromide, tetraethylammonium iodide, tetramethylammonium chloride, tetramethylammonium bromide, tetramethylammonium iodide, benzyltrimethylammonium chloride, benzyltriethylammonium chloride, benzyltripropylammonium chloride, benzyltributylammonium chloride, methyltributylammonium chloride, methyltripropylammonium chloride, methyltriethylammonium chloride, methyltriphenylammonium chloride, phenyltrimethylammonium chloride, benzyltrimethylammonium bromide, benzyltriethylammonium bromide, benzyltripropylammonium bromide, benzyltributylammonium bromide, methyltributylammonium bromide, methyltripropylammonium bromide, methyltriethylammonium bromide, methyltriphenylammonium bromide, phenyltrimethylammonium bromide, benzyltrimethylammonium iodide, benzyltriethylammonium iodide, benzyltripropylammonium iodide, benzyltributylammonium iodide, methyltributylammonium iodide, methyltripropylammonium iodide, methyltriethylammonium iodide, methyltriphenylammonium iodide and phenyltrimethylammonium iodide, methyltributylammonium hydroxide, methyltriethylammonium hydroxide, tetramethylammonium hydroxide, tetraethylammonium hydroxide, tetrapropylammonium hydroxide, tetrabutylammonium hydroxide, tetrapentylammonium hydroxide, tetrahexylammonium hydroxide, tetraoctylammonium hydroxide, tetradecylammonium hydroxide, tetradecyltrihexylammonium hydroxide, tetraoctadecylammonium hydroxide, benzyltrimethylammonium hydroxide, benzyltriethylammonium hydroxide, trimethylphenylammonium hydroxide, triethylmethylammonium hydroxide, trimethylvinylammonium hydroxide, tetramethylammonium fluoride, tetraethylammonium fluoride, tetrabutylammonium fluoride, tetraoctylammonium fluoride and benzyltrimethylammonium fluoride, alone or in any desired mixtures, preferably tetraethylammonium benzoate and/or tetrabutylammonium hydroxide.

13. Prepregs according to at least one of the preceding Claims 7 to 12, **characterized in that** cocatalysts e1) present are glycidyl ethers, glycidyl esters, aliphatic epoxides, diglycidyl ethers based on bisphenol A and glycidyl methacrylates, alone or in any desired mixtures.

14. Prepregs according to at least one of the preceding Claims 7 to 13, **characterized in that** cocatalysts e2) present are zinc acetylacetonate, lithium acetylacetonate and tin acetylacetonate, alone or in any desired mixtures, preferably zinc acetylacetonate.

15. Prepregs according to at least one of the preceding Claims 7 to 14, **characterized in that** cocatalysts e2) present are tetramethylammonium acetylacetonate, tetraethylammonium acetylacetonate, tetrapropylammonium acetylacetonate, tetrabutylammonium acetylacetonate, benzyltrimethylammonium acetylacetonate, benzyltriethylammonium acetylacetonate, tetramethylphosphonium acetylacetonate, tetraethylphosphonium acetylacetonate, tetrapropylphosphonium acetylacetonate, tetrabutylphosphonium acetylacetonate, benzyltrimethylphosphonium acetylacetonate, benzyltriethylphosphonium acetylacetonate, alone or in any desired mixtures, preferably tetraethylammonium acetylacetonate and/or tetrabutylammonium acetylacetonate.

16. Process for producing prepregs according to at least one of the preceding claims,
formed essentially from
A) at least one fibrous carrier
and
B) at least one one-component polyurethane composition with Tg < 40°C, determined according to DIN EN ISO 11357-1,
I. by preparing the one-component polyurethane composition B),
and
II. impregnating the fibrous carrier A) with the one-component polyurethane composition B) which has optionally been dissolved in solvent,
III. and optionally removing the solvent.

17. Direct melt impregnation process for producing prepregs according to at least one of the preceding claims,
formed essentially from
A) at least one fibrous carrier
and
B) at least one one-component polyurethane composition with Tg < 40°C, determined according to DIN EN ISO 11357-1, as matrix material,
I. by preparing the one-component polyurethane composition B) in the melt,
and
II. directly impregnating the fibrous carrier A) with the melt from B).

18. Use of the prepregs according to at least one of the preceding claims, especially comprising fibrous carriers composed of glass fibres, carbon fibres or aramid fibres.

19. Use of the prepregs according to Claim 18,
for production of composites in boat- and shipbuilding, in aerospace technology, in automobile construction, for two-wheeled vehicles, preferably motorcycles and pedal cycles, in the automotive, transportation, construction, medical technology and sports sectors, the electrical and electronics industry, and in energy generation installations, such as for rotor blades in wind turbines.

20. Composite components produced from prepregs according to at least one of Claims 1 to 19.

## Revendications

1. Préimprégnés composés essentiellement de
A) au moins un support fibreux
et
B) au moins une composition de polyuréthane 1K,
la composition de polyuréthane comportant une Tg inférieure à 40 °C, déterminée selon la norme DIN EN ISO 11357-1, contenant essentiellement des diisocyanates et/ou des polyisocyanates bloqués intérieurement et/ou bloqués avec des agents de blocage et/ou leurs composés de polyaddition.

2. Préimprégnés selon au moins l'une des revendications précédentes, **caractérisés en ce qu'**un matériau fibreux en verre, en carbone, en matière plastique, comme un polyamide (aramide) ou un polyester, en fibres naturelles, ou des matériaux fibreux minéraux comme des fibres de basalte ou des fibres céramiques, est contenu.

3. Préimprégnés selon au moins l'une des revendications précédentes, **caractérisés en ce qu'**en tant que support fibreux, des structures planes textiles en non-tissé, en tissu maillé, en étoffe et en tricot, des assemblages sans mailles comme des tissus, des nappes ou des treillis, en tant que matériaux à fibres longues et matériaux à fibres courtes, sont contenus.

4. Préimprégnés selon au moins l'une des revendications précédentes, **caractérisés en ce que** des diisocyanates ou des polyisocyanates, choisis parmi le diisocyanate d'isophorone (IPDI), le diisocyanate d'hexamethylène (HDI), le 4,4'-diisocyanatodicyclohexylméthane, le 2,4'-diisocyanatodicyclohexylméthane, le 2,2'-diisocyanatodicyclohexylméthane seuls ou en mélanges des isomères (H₁₂MDI), le diisocyanate de 2-méthylpentane (MPDI), le diisocyanate de 2,2,4-triméthylhexamethylène, le diisocyanate de 2,4,4-triméthylhexamethylène ainsi que leurs mélanges, (TMDI), le diisocyanate de norbornane (NBDI), seuls ou en mélanges, sont utilisés.

5. Préimprégnés selon au moins l'une des revendications précédentes, **caractérisés en ce que** des agents de blocage externes, choisis parmi l'ester d'éthyle de l'acide acétoacétique, la diisopropylamine, le méthyléthylcétoxime, l'ester diéthylique de l'acide malonique, 1'ε-caprolactame, le 1,2,4-triazole, le phénol ou des phénols substitués et/ou le 3,5-diméthylpyrazole, sont utilisés.

6. Préimprégnés selon au moins l'une des revendications précédentes, **caractérisés en ce que** les compositions de polyuréthane 1K B) contiennent des catalyseurs supplémentaires, préférablement le dilaurate de dibutylétain, l'octoate de zinc, le néodécanoate de bismuth, et/ou des amines tertiaires, préférablement le 1,4-diazabicyclo[2.2.2]octane, en des quantités de 0,001 à 1 % en poids.

7. Préimprégnés, selon au moins l'une des revendications 1 à 3, contenant au moins une composition de polyuréthane 1K B) contenant des groupes uretdione comportant une Tg < 40 °C, déterminée selon la norme DIN EN ISO 11357-1, contenant essentiellement
a) au moins un composé de polyaddition contenant des groupes uretdione, basé sur la réaction de polyaddition de polyisocyanates contenant des groupes uretdione aliphatiques, (cyclo)aliphatiques ou cycloaliphatiques et de composés contenant un groupe hydroxyle, le composé de polyaddition présentant une teneur en NCO libre inférieure à 5 % en poids et une teneur en uretdione de 3 à 25 % en poids,
b) éventuellement au moins un catalyseur,
c) éventuellement des auxiliaires et des additifs connus dans la chimie des polyuréthanes.

8. Préimprégnés selon la revendication 7, **caractérisés en ce que** des diisocyanates ou des polyisocyanates, choisis parmi le diisocyanate d'isophorone (IPDI), le diisocyanate d'hexamethylène (HDI), le 4,4'-diisocyanatodicyclohexylméthane, le 2,4'-diisocyanatodicyclohexylméthane, le 2,2'-diisocyanatodicyclohexylméthane seuls ou en mélanges des isomères (H₁₂MDI), le diisocyanate de 2-méthylpentane (MPDI), le diisocyanate de 2,2,4-triméthylhexamethylène, le diisocyanate de 2,4,4-triméthylhexamethylène ainsi que leurs mélanges, (TMDI), le diisocyanate de norbornane (NBDI), seuls ou en mélanges, sont utilisés pour la préparation des uretdiones.

9. Préimprégnés selon la revendication 8, **caractérisés en ce que** des diisocyanates ou des polyisocyanates, choisis parmi l'IPDI, le HDI, le TMDI et le H₁₂MDI utilisés, seuls ou en mélanges. Dans un mode de réalisation particulièrement préféré, l'IPDI et/ou le 4-4'-H12MDI et/ou le HDI et/ou un mélange de 2,2,4-TMDI et de 2,4,4-TMDI, seuls ou en mélanges, sont utilisés pour la préparation des uretdiones.

10. Préimprégnés, selon au moins l'une des revendications 7 à 9, contenant
B) au moins une composition de polyuréthane 1K contenant des groupes uretdione comportant une Tg < 40 °C, déterminée selon la norme DIN EN ISO 11357-1, contenant essentiellement
a) au moins un composé de polyaddition contenant des groupes uretdione
et
b) éventuellement au moins un catalyseur PUR,
c) éventuellement des auxiliaires et des additifs connus dans la chimie des polyuréthanes,
d) 0,1 à 5 % en poids d'au moins un catalyseur choisi parmi des sels d'ammonium quaternaires et/ou des sels de phosphonium quaternaires avec des halogènes, des hydroxydes, des alcoolates ou des anions d'acides organiques ou inorganiques en tant que contre-ion,
et
e) 0,1 à 5 % en poids d'au moins un co-catalyseur, choisi parmi
e1) au moins un époxyde
et/ou
e2) au moins un acétylacétonate métallique et/ou un acétylacétonate d'ammonium quaternaire et/ou un acétylacétonate de phosphonium quaternaire.

11. Préimprégnés, selon au moins l'une des revendications 7 à 10, contenant
B) au moins une composition de polyuréthane 1K contenant des groupes uretdione comportant une Tg < 40 °C, déterminée selon la norme DIN EN ISO 11357-1, contenant essentiellement
a) au moins un composé de polyaddition contenant des groupes uretdione à base de composés de polyaddition composés de polyisocyanates contenant des groupes uretdione aliphatiques, (cyclo)aliphatiques ou cycloaliphatiques et de composés contenant un groupe hydroxyle, le composé de polyaddition présentant une teneur en NCO libre inférieure à 5 % en poids et une teneur en uretdione de 3 à 25 % en poids,
et
b) éventuellement au moins un catalyseur PUR,
c) éventuellement des auxiliaires et des additifs connus dans la chimie des polyuréthanes,
d) 0,1 à 5 % en poids d'au moins un catalyseur choisi parmi des sels d'ammonium quaternaires et/ou des sels de phosphonium quaternaires avec des halogènes, des hydroxydes, des alcoolates ou des anions d'acides organiques ou inorganiques en tant que contre-ion,
et
e) 0,1 à 5 % en poids d'au moins un co-catalyseur, choisi parmi
e1) au moins un époxyde
et/ou
e2) au moins un acétylacétonate métallique et/ou un acétylacétonate d'ammonium quaternaire et/ou un acétylacétonate de phosphonium quaternaire.

12. Préimprégnés selon au moins l'une des revendications précédentes 7 à 11, **caractérisés en ce que** sont contenus en tant que catalyseurs d) du formiate de tétraméthylammonium, de l'acétate de tétraméthylammonium, du propionate de tétraméthylammonium, du butyrate de tétraméthylammonium, du benzoate de tétraméthylammonium, du formiate de tétraéthylammonium, de l'acétate de tétraéthylammonium, du propionate de tétraéthylammonium, du butyrate de tétraéthylammonium, du benzoate de tétraéthylammonium, du formiate de tétrapropylammonium, de l'acétate de tétrapropylammonium, du propionate de tétrapropylammonium, du butyrate de tétrapropylammonium, du benzoate de tétrapropylammonium, du formiate de tétrabutylammonium, de l'acétate de tétrabutylammonium, du propionate de tétrabutylammonium, du butyrate de tétrabutylammonium et du benzoate de tétrabutylammonium et de l'acétate de tétrabutylphosphonium, du formiate de tétrabutylphosphonium et de l'acétate d'éthyltriphénylphosphonium, du benzotriazolate de tétrabutylphosphonium, du phénolate de tétraphénylphosphonium et du décanoate de trihexyltétradécylphosphonium, de l'hydroxyde de méthyltributylammonium, de l'hydroxyde de méthyltriéthylammonium, de l'hydroxyde de tétraméthylammonium, de l'hydroxyde de tétraéthylammonium, de l'hydroxyde de tétrapropylammonium, de l'hydroxyde de tétrabutylammonium, de l'hydroxyde de tétrapentylammonium, de l'hydroxyde de tétrahexylammonium, de l'hydroxyde de tétraoctylammonium, de l'hydroxyde de tétradécylammonium, de l'hydroxyde de tétradécyltrihexylammonium, de l'hydroxyde de tétraoctadécylammonium, de l'hydroxyde de benzyltriméthylammonium, de l'hydroxyde de benzyltriéthylammonium, de l'hydroxyde de triméthylphénylammonium, de l'hydroxyde de triéthylméthylammonium, de l'hydroxyde de triméthylvinylammonium, du méthanolate de méthyltributylammonium, du méthanolate de méthyltriéthylammonium, du méthanolate de tétraméthylammonium, du méthanolate de tétraéthylammonium, du méthanolate de tétrapropylammonium, du méthanolate de tétrabutylammonium, du méthanolate de tétrapentylammonium, du méthanolate de tétrahexylammonium, du méthanolate de tétraoctylammonium, du méthanolate de tétradécylammonium, du méthanolate de tétradécyltrihexylammonium, du méthanolate de tétraoctadécylammonium, du méthanolate de benzyltriméthylammonium, du méthanolate de benzyltriéthylammonium, du méthanolate de triméthylphénylammonium, du méthanolate de triéthylméthylammonium, du méthanolate de triméthylvinylammonium, de l'éthanolate de méthyltributylammonium, de l'éthanolate de méthyltriéthylammonium, de l'éthanolate de tétraméthylammonium, de l'éthanolate de tétraéthylammonium, de l'éthanolate de tétrapropylammonium, de l'éthanolate de tétrabutylammonium, de l'éthanolate de tétrapentylammonium, de l'éthanolate de tétrahexylammonium, du méthanolate de tétraoctylammonium, de l'éthanolate de tétradécylammonium, de l'éthanolate de tétradécyltrihexylammonium, de l'éthanolate de tétraoctadécylammonium, de l'éthanolate de benzyltriméthylammonium, de l'éthanolate de benzyltriéthylammonium, de l'éthanolate de triméthylphénylammonium, de l'éthanolate de triéthylméthylammonium, de l'éthanolate de triméthylvinylammonium, du benzylate de méthyltributylammonium, du benzylate de méthyltriéthylammonium, du benzylate de tétraméthylammonium, du benzylate de tétraéthylammonium, du benzylate de tétrapropylammonium, du benzylate de tétrabutylammonium, du benzylate de tétrapentylammonium, du benzylate de tétrahexylammonium, du benzylate de tétraoctylammonium, du benzylate de tétradécylammonium, du benzylate de tétradécyltrihexylammonium, du benzylate de tétraoctadécylammonium, du benzylate de benzyltriméthylammonium, du benzylate de benzyltriéthylammonium, du benzylate de triméthylphénylammonium, du benzylate de triéthylméthylammonium, du benzylate de triméthylvinylammonium, du fluorure de tétraméthylammonium, du fluorure de tétraéthylammonium, du fluorure de tétrabutylammonium, du fluorure de tétraoctylammonium, du fluorure de benzyltriméthylammonium, de l'hydroxyde de tétrabutylphosphonium, du fluorure de tétrabutylphosphonium, du chlorure de tétrabutylammonium, du bromure de tétrabutylammonium, de l'iodure de tétrabutylammonium, du chlorure de tétraéthylammonium, du bromure de tétraéthylammonium, de l'iodure de tétraéthylammonium, du chlorure de tétraméthylammonium, du bromure de tétraméthylammonium, de l'iodure de tétraméthylammonium, du chlorure de benzyltriméthylammonium, du chlorure de benzyltriéthylammonium, du chlorure de benzyltripropylammonium, du chlorure de benzyltributylammonium, du chlorure de méthyltributylammonium, du chlorure de méthyltripropylammonium, du chlorure de méthyltriéthylammonium, du chlorure de méthyltriphénylammonium, du chlorure de phényltriméthylammonium, du bromure de benzyltriméthylammonium, du bromure de benzyltriéthylammonium, du bromure de benzyltripropylammonium, du bromure de benzyltributylammonium, du bromure de méthyltributylammonium, du bromure de méthyltripropylammonium, du bromure de méthyltriéthylammonium, du bromure de méthyltriphénylammonium, du bromure de phényltriméthylammonium, de l'iodure de benzyltriméthylammonium, de l'iodure de benzyltriéthylammonium, de l'iodure de benzyltripropylammonium, de l'iodure de benzyltributylammonium, de l'iodure de méthyltributylammonium, de l'iodure de méthyltripropylammonium, de l'iodure de méthyltriéthylammonium, de l'iodure de méthyltriphénylammonium et de l'iodure de phényltriméthylammonium, de l'hydroxyde de méthyltributylammonium, de l'hydroxyde de méthyltriéthylammonium, de l'hydroxyde de tétraméthylammonium, de l'hydroxyde de tétraéthylammonium, de l'hydroxyde de tétrapropylammonium, de l'hydroxyde de tétrabutylammonium, de l'hydroxyde de tétrapentylammonium, de l'hydroxyde de tétrahexylammonium, de l'hydroxyde de tétraoctylammonium, de l'hydroxyde de tétradécylammonium, de l'hydroxyde de tétradécyltrihexylammonium, de l'hydroxyde de tétraoctadécylammonium, de l'hydroxyde de benzyltriméthylammonium, de l'hydroxyde de benzyltriéthylammonium, de l'hydroxyde de triméthylphénylammonium, de l'hydroxyde de triéthylméthylammonium, de l'hydroxyde de triméthylvinylammonium, du fluorure de tétraméthylammonium, du fluorure de tétraéthylammonium, du fluorure de tétrabutylammonium, du fluorure de tétraoctylammonium et du fluorure de benzyltriméthylammonium, seuls ou en mélanges quelconques, préférablement du benzoate de tétraéthylammonium et/ou de l'hydroxyde de tétrabutylammonium.

13. Préimprégnés selon au moins l'une des revendications précédentes 7 à 12, **caractérisés en ce qu'**en tant que co-catalyseurs e1), des éthers de glycidyle, des esters de glycidyle, des époxydes aliphatiques, des éthers de diglycidyle à base de bisphénol A et des méthacrylates de glycidyle, seuls ou en mélanges, sont contenus.

14. Préimprégnés selon au moins l'une des revendications précédentes 7 à 13, **caractérisés en ce qu'**en tant que co-catalyseurs e2), de l'acétylacétonate de zinc, de l'acétylacétonate de lithium et de l'acétylacétonate d'étain, seuls ou en mélanges, préférablement de l'acétylacétonate de zinc, sont contenus.

15. Préimprégnés selon au moins l'une des revendications précédentes 7 à 14, **caractérisés en ce qu'**en tant que co-catalyseurs e2), de l'acétylacétonate de tétraméthylammonium, de l'acétylacétonate de tétraéthylammonium, de l'acétylacétonate de tétrapropylammonium, de l'acétylacétonate de tétrabutylammonium, de l'acétylacétonate de benzyltriméthylammonium, de l'acétylacétonate de benzyltriéthylammonium, de l'acétylacétonate de tétraméthylphosphonium, de l'acétylacétonate de tétraéthylphosphonium, de l'acétylacétonate de tétrapropylphosphonium, de l'acétylacétonate de tétrabutylphosphonium, de l'acétylacétonate de benzyltriméthylphosphonium, de l'acétylacétonate de benzyltriéthylphosphonium, seuls ou en mélanges, préférablement de l'acétylacétonate de tétraéthylammonium et/ou de l'acétylacétonate de tétrabutylammonium, sont contenus.

16. Procédé pour la préparation de préimprégnés selon au moins l'une des revendications précédentes composés essentiellement de
A) au moins un support fibreux
et
B) au moins une composition de polyuréthane 1K comportant une Tg < 40 °C, déterminée selon la norme DIN EN ISO 11357-1,
I. par préparation de la composition de polyuréthane 1K B),
et
II. imprégnation du support fibreux A) avec la composition de polyuréthane 1K B), qui est éventuellement dissoute dans un solvant,
III. et éventuellement élimination du solvant.

17. Procédé d'imprégnation directe en fusion pour la préparation de préimprégnés selon au moins l'une des revendications précédentes, composés essentiellement de
A) au moins un support fibreux
et
B) au moins une composition de polyuréthane 1K comportant une Tg < 40 °C, déterminée selon la norme DIN EN ISO 11357-1, en tant que matériau de matrice,
I. par préparation de la composition de polyuréthane 1K B) à l'état fondu,
et
II. imprégnation directe du support fibreux A) avec la masse fondue de B).

18. Utilisation de préimprégnés selon au moins l'une des revendications précédentes, en particulier comportant des supports fibreux de fibres de verre, de fibres de carbone ou de fibres d'aramide.

19. Utilisation des préimprégnés selon la revendication 18, pour la préparation de composites dans la construction de bateaux et de navires, dans la technique aérospatiale, dans la construction automobile, pour des deux-roues préférablement des motocyclettes et des bicyclettes, dans les domaines automobiles, des transports, de la construction, de la technique médicale, du sport, de l'industrie électrique et électronique, des installations de production d'énergie, comme pour des pales de rotor d'éoliennes.

20. Composants composites, préparés à partir de préimprégnés selon au moins l'une des revendications 1 à 19.
